# EUROPÄISCHE PATENTSCHRIFT

(11) **EP 0 741 449 B1**
(45) Veröffentlichungstag und Bekanntmachung des Hinweises auf die Patenterteilung: **12.03.2003**
(21) Anmeldenummer: 96106528.1
(22) Anmeldetag: 25.04.1996
(51) Int. Cl.: H02P 6/16, H02P 6/22

(54) **Elektronisch kommutierter Motor, und Verfahren zur Ansteuerung eines solchen Motors**
Electronically commutated motor and process for controlling such a motor
Moteur de commutation électronique et procédé de commande pour un tel moteur

(30) Priorität: 02.05.1995 DE 19515944; 13.05.1995 DE 19517665
(43) Veröffentlichungstag der Anmeldung: 06.11.1996
(73) Patentinhaber: PAPST-MOTOREN GmbH & Co. KG, 78106 St Georgen (DE)
(72) Erfinder: Jeske, Frank, Dipl.-Ing., 78112 St. Georgen (DE); Rappenecker, Hermann, Dipl.-Ing., 78147 Vöhrenbach (DE)

(56) Entgegenhaltungen:
- DE-A- 3 527 296
- MOTOROLA TECHNICAL DEVELOPMENTS, Bd. 9, August 1989, SCHAUMBURG, ILLINOIS US, Seiten 56-57, XP000053786 J. BABICO: "3-PHASE BRUSHLESS DC MOTOR USING A SINGLE SENSOR"
- PATENT ABSTRACTS OF JAPAN vol. 12, no. 13 (E-573) [2860] , 14.Januar 1988 & JP-A-62 171490 (BROTHER IND LTD), 28.Juli 1987,

## Beschreibung

Die Erfindung betrifft ein Verfahren zur Ansteuerung eines elektronisch kommutierten Motors (ECM). Sie betrifft ferner einen elektronisch kommutierten Motor.

Bei einem dreisträngigen ECM benötigt man bei konventioneller Bauweise drei Rotorstellungssensoren, die in Abständen von 120° el. voneinander angeordnet sind, also z.B. an den Statorstellungen 0° el., 120° el., und 240° el., oder (0° + n x 360°) el., (120° + m x 360°) el., etc., wobei m, n = 0, 1, 2 ... sind. Gerade bei Motoren mit kleiner Leistung verbrauchen diese Sensoren viel Strom, und dieser Stromverbrauch trägt nichts zur mechanischen Leistung des Motors bei, ist also eine reine Verlustleistung, die den Wirkungsgrad des Motors reduziert.

Hat z.B. ein solcher Motor als Rotorstellungssensoren drei Hall-IC's, von denen jeder einen Strom von 15 mA benötigt, so ergibt sich bei einer Betriebsspannung von 40 V eine Verlustleistung von 40 x 0,045 = 1,8 W, und diese Verlustleistung kann wesentlich höher sein als die abgegebene mechanische Leistung des Motors von z.B. 0,5 W. Entsprechend schlecht wird der Wirkungsgrad eines solchen Motors.

Man hat versucht, diesen Nachteil durch die sogenannte Sensorless-Technik zu umgehen, doch arbeitet diese nicht in allen Fällen mit der gewünschten Zuverlässigkeit.

Ferner ist aus der Veröffentlichung MOTOROLA TECHNICAL DEVELOPMENTS, Bd. 9, August 1989, SCHAUMBURG, ILLINOIS US, Seiten 56-57, XP000053786 J. BABICO: '3-PHASE BRUSHLESS DC MOTOR USING A SINGLE SENSOR' ein dreisträngiger elektronisch kommutierter Motor bekannt, der nur einen einzigen Rotorstellungssensor verwendet. Zur Erzeugung der Signalkombinationen für die Steuerung der drei Stränge werden zwei in Reihe geschaltete Zeitglieder verwendet, die aus dem Signal des einzigen Rotorstellungssensors zwei zusätzliche Signale ableiten. Solche Zeitglieder als Ersatz für ein Rotorstellungssignal setzen jedoch voraus, daß der Motor mit einer festgelegten Drehzahl rotiert, was bei den meisten Anwendungen nicht der Fall ist.

Aus der DE-A-3 527 296 (Fujisaki et al) kennt man einen dreisträngigen elektronisch kommutierten Motor, dessen Rotormagnete sich jeweils nur über 120° el. erstrecken, so daß die Rotorstellungssignale der beiden verwendeten Hallgeneratoren jeweils während 120° den Wert "+ 1", während der anschließenden 60° el. den Wert "0", während der anschließenden 120° el. den Wert "- 1" und anschließend während 60° el. wieder den Wert "0" haben. Es handelt sich also um ein ternäres Signal, und aus der Kombination zweier solcher ternärer Signale läßt sich mittels einer logischen Schaltung ein vollständig definiertes drittes ternäres Rotorstellungssignal erzeugen, so daß ein dritter Hallgenerator entbehrlich ist und trotzdem ein sicherer Anlauf des Motors möglich ist. Jedoch hat ein solcher Motor eine schlechte Leistung, weil die Rotormagnete sehr kurz sind, d.h. der Motor wird sehr schlecht ausgenutzt.

Aus der JP-A-62/171490 ist ein dreisträngiger elektronisch kommutierter Motor bekannt, der eine *separate* Sensoranordnung zur Erzeugung eines digitalen Drehzahlsignals und zur Erzeugung von zwei Rotorstellungssignalen verwendet. Die Rotorstellungssignale haben jeweils während 120° el. den logischen Wert "1", und während 60° el. den logischen Wert "0". In diesem Fall läßt sich für alle Drehstellungen ein definiertes drittes Rotorstellungssignal durch eine logische Schaltung erzeugen, da bei einer solchen Anordnung immer zwei der Signale den logischen Wert "1" haben müssen, und ein drittes Signal den logischen wert "0". Voraussetzung ist jedoch, daß ein separater Rotorstellungsgeber verwendet wird, der diese Signale mit ihrer speziellen Signalform erzeugt. In den meisten Fällen ist jedoch ein spezieller Rotorstellungsgeber zu teuer.

Aufgabe der Erfindung ist es, ein neues Verfahren zur Ansteuerung eines elektronisch kommutierten Motors, sowie einen solchen Motor, bereitzustellen.

Nach der Erfindung wird diese Aufgabe gelöst durch ein Verfahren zur Ansteuerung eines drei- oder mehrsträngigen, elektronisch kommutierten Motors, welcher zur Erfassung seiner Rotorstellung eine Anzahl von Rotorstellungssensoren aufweist, die um wenigstens 1 kleiner ist als die Zahl der für diese Strangzahl an sich erforderlichen Rotorstellungssensoren, mit folgenden Schritten:
a) Für die Rotorstellungsbereiche, bei denen eine ausreichende Zuordnung möglich ist, wird aus den Ausgangssignalen der vorhandenen Rotorstellungssensoren ein virtuelles Rotorstellungssignal abgeleitet;
b) für die Rotorstellungsbereiche, bei denen keine ausreichende Zuordnung möglich ist, wird für das virtuelle Rotorstellungssignal ein Schätzwert verwendet, der eine Funktion des Ausgangssignals mindestens eines der vorhandenen Rotorstellungssensoren ist.

Während man also bei konventioneller Bauweise beispielsweise bei einem dreisträngigen Rotor drei Rotorstellungssensoren verwenden muß, benötigt man beim erfindungsgemäßen Verfahren nur zwei Sensoren, was den Stromverbrauch entsprechend reduziert und den Wirkungsgrad verbessert. Dabei gibt es Rotorstellungsbereiche, für die auch aus den Ausgangssignalen von nur zwei (vorhandenen) Sensoren die Rotorstellung mit einer für den Betrieb des Motors ausreichenden Genauigkeit bestimmt werden kann, und für diese Bereiche stellt die Kommutierung auch beim Start kein Problem dar, wenn sich der Rotor beim Start in einem solchen Bereich befindet, denn man kann aus den Signalen der vorhandenen Rotorstellungssensoren zusätzlich ein korrektes virtuelles Rotorstellungssignal herleiten. (Virtuell bedeutet in diesem Zusammenhang, daß zwar ein entsprechender Sensor nicht vorhanden ist, daß man aber mit einem synthetisch erzeugten Signal arbeitet, das ebenfalls eine Funktion der Rotorstellung ist.)

Ferner gibt es Rotorstellungsbereiche, in denen aus den Ausgangssignalen der vorhandenen Sensoren dieses virtuelle Signal nicht mit ausreichender Genauigkeit hergeleitet werden kann, weil Mehrdeutigkeiten bestehen, d.h. man kann nur sehr grob sagen, in welchem (großen) Rotorstellungsbereich sich der Rotor im Augenblick befindet. In diesen Fällen, in denen keine ausreichend eindeutige Zuordnung möglich ist, wird ein Schätzwert für das virtuelle Rotorstellungssignal verwendet, und auch dieser Schätzwert ist eine Funktion der Ausgangssignale der vorhandenen Rotorstellungssensoren.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Ansprüchen. Es zeigt:
- Fig. 1: den prinzipiellen Aufbau eines elektronisch kommutierten Motors mit drei Strängen (Phasen), nach dem Stand der Technik,
- Fig. 2: den prinzipiellen Aufbau der beim Motor nach Fig. 1 verwendeten Brückenschaltung, über welche die Statorwicklung dieses Motors pro Rotordrehung von 360° el. sechs Stromimpulse erhält; Fig. 2A zeigt die Steuerung dieser Impulse, durch die Rotorstellungssignale H1, H2, H3 von drei Rotorstellungsgebern bzw. Sensoren,
- Fig. 3: für eine Rotordrehung von 360° el. die Rotorstellungssignale der drei Rotorstellungsgeber des Motors der Fig. 1, und zwar in den Fig. 3a, b und c als Signale, in der Tabelle in Fig. 3g als digitale Werte, und in der Tabelle in Fig. 3h die Ansteuerung der Brückenschaltung der Fig. 2B während des Drehwinkels von 360° el. (anschl. an diesen Drehwinkel wiederholt sich der ganze Ablauf identisch),
- Fig. 4: eine Prinzipdarstellung zur Erläuterung der Stromflußphase bei einem elektronisch kommutierten Motor,
- Fig. 5: ein Schaubild, das in konventioneller Form oben die induzierte Spannung in einem Strang (Phase) des Motors der Fig. 1 (bei trapezförmiger Magnetisierung des Rotors) und darunter den Strom in diesem Strang bei einer mittleren Stromflußphase von 90° el. und einer Stromflußbreite von 60° el. zeigt,
- Fig. 6: ein Schaltbild eines bevorzugten Ausführungsbeispiels eines elektronisch kommutierten Motors nach der Erfindung; die Statorwicklungen, welche an die Ausgänge L1, L2 und L3 angeschlossen werden, können identisch ausgebildet sein wie bei Fig. 1 und sind deshalb nicht dargestellt,
- Fig. 7: eine vergrößerte Darstellung des bei Fig. 6 bevorzugt verwendeten Mikroprozessors vom Typ PIC16CR57A der Firma MicroChip,
- Fig. 8: Schaubilder zur Erläuterung des Schaltbilds der Fig. 6,
- Fig. 9: ein Flußdiagramm der Abläufe, die beim Betrieb des Motors der Fig. 6 in dessen Mikroprozessor in ständiger Wiederholung ablaufen, um diesen Motor sowohl beim Start wie im Betrieb richtig zu kommutieren,
- Fig. 10: eine Prinzipdarstellung analog Fig. 4 zur Erläuterung der Anlaufprobleme bei bestimmten exzeptionellen Rotorstellungen, wie sie beim Motor gemäß Fig. 6 gemeistert werden müssen,
- Fig. 11: ein Schaubild analog Fig. 5 für den Motor der Fig. 6, das oben die induzierte Spannung in einem Strang (Phase) (bei trapezförmiger Magnetisierung des Rotors) und darunter den Strom in diesem Strang bei einer Stromflußphase von 180° zeigt, wie sie beim Motor der Fig. 6 in bestimmten Startstellungen auftreten kann, zur Erläuterung des Flußdiagramms der Fig. 9,
- Fig. 12: ein Schaubild zur Erläuterung der fortlaufenden (korrekten) Kommutierung bei rotierendem Motor, zur Erläuterung des Flußdiagramms der Fig, 9,
- Fig. 13: eine Grafik zur Erläuterung des Flußdiagramms der Fig. 9,
- Fig. 14a und 14b: Schaubilder zur Erläuterung der intermittierenden Stromversorgung der Rotorstellungssensoren,
- Fig. 15: eine Darstellung von Einzelheiten des in Fig. 9 dargestellten Programmteils S159, und
- Fig. 16: eine bevorzugte Variante der Erfindung, durch welche der Wirkungsgrad des Motors zusätzlich erhöht werden kann.

Die vorliegende Erfindung ist schwierig zu verstehen, und deshalb wird eine Vielzahl von grafischen Darstellungen verwendet, um das Verständnis zu erleichtern. Ein richtiges Verständnis dieser Erfindung erfordert eine gute Kenntnis sowohl des Elektromaschinenbaus wie der Digitaltechnik. Die Erfindung hat als Kerngedanken die Einsparung mindestens eines aus einer Mehrzahl von Rotorstellungssensoren, und seine Ersetzung durch Intelligenz in Form von Teilen des Programms eines Mikroprozessors. Diese Einsparung spart Platz im Motor; sie spart ein Bauteil und verbilligt dadurch den Motor; und sie spart Strom und verbessert dadurch den Wirkungsgrad des Motors, weil das nicht vorhandene Bauteil auch keinen Strom verbraucht.

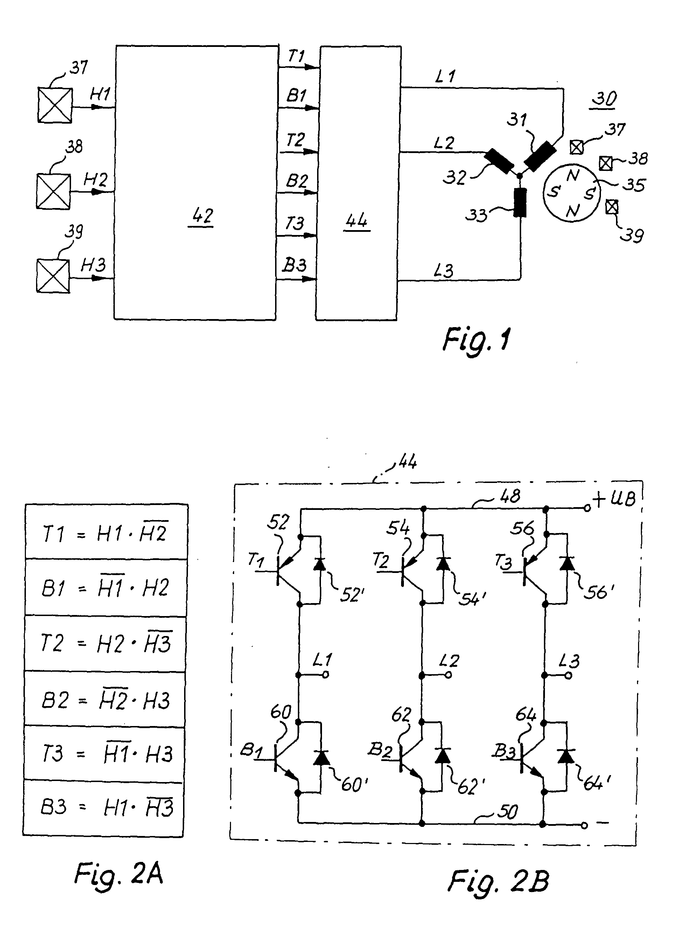

Anhand der Fig. 1 bis 5 werden zunächst die Grundlagen erläutert, die zum Verständnis der Erfindung notwendig erscheinen. Fig. 1 zeigt einen dreisträngigen elektronisch kommutierten Motor 30 nach dem Stand der Technik. Dieser hat eine Statorwicklung mit drei Strängen 31, 32, 33, deren Anschlüsse mit L1, L2, L3 bezeichnet sind. Diese drei Stränge, die man auch als Phasen bezeichnet, sind hier im Stern geschaltet, könnten aber ebensogut im Dreieck geschaltet sein. Der permanentmagnetische Rotor des Motors 30 ist symbolisch bei 35 angedeutet, und um ihn herum sind am Stator drei Rotorstellungssensoren 37, 38 und 39 mit Abständen von 120° el. angeordnet. (Da der dargestellte Rotor 35 vierpolig ist, entsprechen 120° el. einem Winkel von 60° mech.) Diese Sensoren sind gewöhnlich Hall-IC's, die einen relativ hohen Strombedarf haben, z.B. 15 mA, und die deshalb bei kleinen Motoren den Wirkungsgrad stark verschlechtern.

Diese Sensoren 37, 38 und 39 sind in Fig. 1 links nochmals dargestellt. Ihre Ausgangssignale sind mit H1, H2 und H3 bezeichnet und werden einer Kommutierungssteuerung 42 zugeführt, welche Signale T1, B1, T2, B2, T3, B3 abgibt, die einer Vollbrückenschaltung 44 zugeführt werden, an welche die Anschlüsse L1, L2 und L3 der Wicklungen 31, 32, 33 angeschlossen sind.

Fig. 2B zeigt in prinzipieller Darstellung den Aufbau der Brückenschaltung 44 mit bipolaren Transistoren. Naturgemäß können hier in gleicher Weise MOSFETs, Darlingtontransistoren etc. verwendet werden. Eine Plusleitung mit dem Potential +U_{B} (z.B. + 40 V) ist mit 48 bezeichnet, und eine Minusleitung mit dem Potential 0 V (GND) ist mit 50 bezeichnet. Die drei oberen Brückentransistoren 52, 54 und 56 sind pnp-Transistoren, und zu jedem ist in der dargestellten Weise eine Freilaufdiode 52', 54' und 56' antiparallel geschaltet. Der Emitter ist jeweils mit der Plusleitung 48 verbunden, der Kollektor mit den Ausgängen L1 bzw. L2 bzw. L3. An der Basis erhalten diese drei oberen Transistoren die Signale T1, T2 und T3, wie sie sich aus Fig. 2A ergeben. Hat z.B. der Hall-IC 37 das Ausgangssignal H1 = 1, und der Hall-IC 38 das Ausgangssignal H2/=0, so ist der Transistor 52 leitend, und die Transistoren 54 und 56 sind gesperrt.

Die unteren Brückentransistoren 60, 62 und 64 sind npn-Transistoren; ihre Emitter sind mit der Minusleitung 50 verbunden, ihre Kollektoren mit den Ausgängen L1, L2, L3, und zu jedem ist eine Freilaufdiode 60', 62', 64' antiparallel geschaltet. An der Basis erhalten diese unteren Transistoren die Signale B1, B2 bzw. B3, wie sie sich aus Fig. 2A ergeben.

Es braucht nicht betont zu werden, daß dies nur ein Ausführungsbeispiel ist, und daß diese Dinge beschrieben werden, damit der Leser anhand eines konkreten Beispiels die Erfindung verstehen kann.

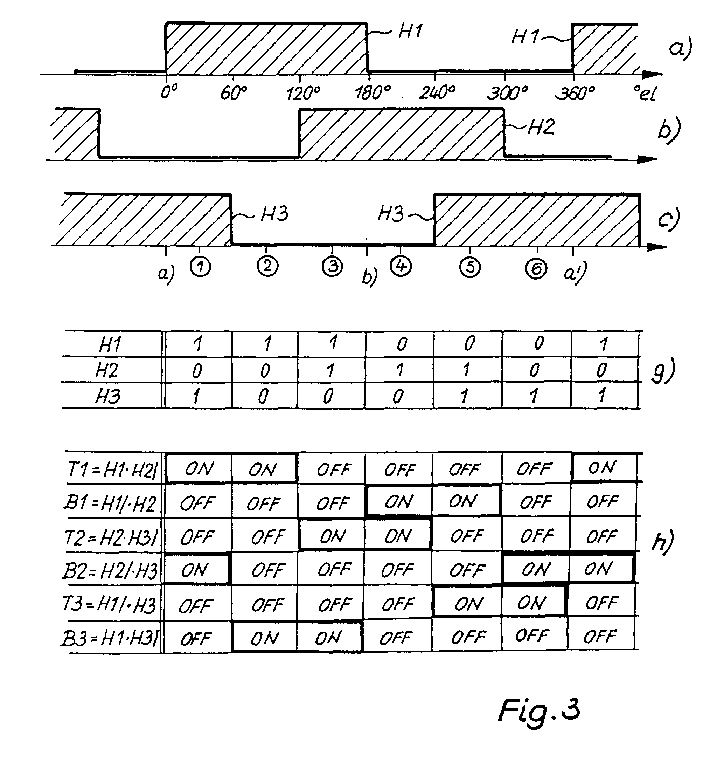

Die Fig. 3a, 3b und 3c zeigen die drei Sensorsignale H1, H2, H3, die jeweils um 120° el. gegeneinander versetzt sind. Die Bezifferung ist so gewählt, daß H1 beim Winkel 0° el. von "0" auf "1" geht, bei 180° el. von "1" auf "0", und bei 360° el. wieder von "0" auf "1", d.h. wenn sich der Rotor 35 um 360° el. dreht, so ergeben sich die Signale gemäß Fig. 3a, Fig. 3b und Fig. 3c. Die Funktion dieser Signale ist, der Kommutierungssteuerung 42 die Information zu liefern, in welcher Drehstellung sich der Rotor 35 im Augenblick befindet.

Diese Information über die Drehstellung ist nur grob, denn die Kommutierungssteuerung 42 benötigt nur diese grobe Information, d.h. sie muß wissen:

Befindet sich der Rotor 35 in dem Drehstellungsbereich von 1° bis 60° el.? Dieser Stellungsbereich ist in Fig. 3c durch die Zahl ① symbolisiert.

Oder befindet sich der Rotor 35 im Bereich von 61° bis 120° el.? Dieser Stellungsbereich ist in Fig. 3c durch die Zahl ② symbolisiert.

Oder befindet sich der Rotor 35 im Bereich von 121° bis 180° el.? Dieser Bereich ist in Fig. 3c durch die Zahl ③ symbolisiert.

Oder befindet sich der Rotor im Bereich von 181° bis 240° el.? Dieser Bereich ist in Fig. 3c durch die Zahl ④ symbolisiert.

Oder befindet sich der Rotor im Bereich von 241° bis 300° el.? Dieser Bereich ist in Fig. 3c durch die Zahl ⑤ symbolisiert.

Oder befindet sich der Rotor 35 im Bereich von 301° bis 360° el.? Dieser Bereich ist in Fig. 3c durch die Zahl ⑥ symbolisiert.

Für den Drehstellungsbereich 1° bis 60° el. liefern z.B. die drei Sensoren die Signalkombination H1, H2, H3 = 101, wie in Fig. 3g dargestellt, und diese Signalkombination bewirkt gemäß Fig. 3h, daß die Signale T1 und B2 hoch werden, d.h. daß in der Brückenschaltung 44 die Transistoren 52 und 62 eingeschaltet werden, so daß von der Plusleitung 48 über den Transistor 52, die Stränge 31 und 32, und den Transistor 62 ein Strom zur Minusleitung 50 fließt.

Im anschließenden Drehwinkelbereich von 61° bis 120° el. lautet die Rotorstellungsinformation H1, H2, H3 = 100, und sie bewirkt, daß die Signale T1 und B3 hoch werden, wodurch die Transistoren 52 und 64 eingeschaltet werden und ein Strom über den Strang 31 und den Strang 33 von der Plusleitung zur Minusleitung fließt.

Der Leser versteht also, daß bei diesem Beispiel jeweils nach einer Rotordrehung von 60° el. die Brückenschaltung 44 umgeschaltet wird. Diese Umschaltung bezeichnet man im Elektromaschinenbau als Kommutierung. Der Zweck der Übung ist, den Strom zu den drei Strängen 31, 32, 33 des Stators so zu steuern, daß das von der Statorwicklung erzeugte Magnetfeld immer um einen gewissen Winkel dem Feld des permanentmagnetischen Rotors 35 vorausläuft und diesen daher in der gewünschten Richtung "nach vorne zieht", also antreibt. Diesen Winkel bezeichnet man als die mittlere Stromflußphase.

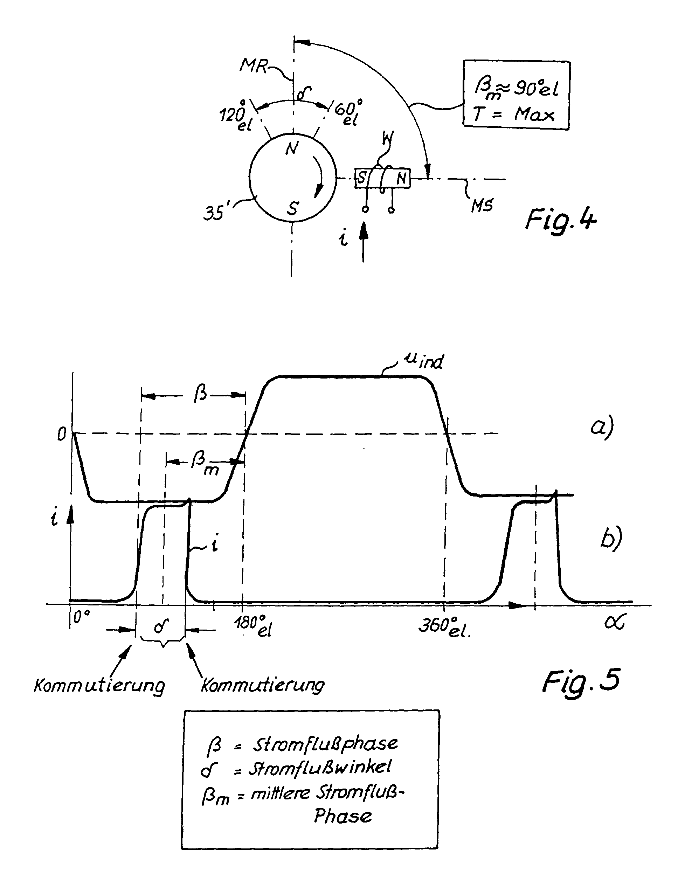

Fig. 4 zeigt dies in einer prinzipiellen Darstellung. Der permanentmagnetische Rotor 35' ist hier zweipolig dargestellt, und es ist nur eine einzige Statorwicklung W dargestellt. Das Magnetfeld MR des Rotors 35' hat einen senkrechten Verlauf, und das Magnetfeld MS des Stators hat einen waagerechten Verlauf, d.h. zwischen ihnen liegt ein Winkel von 90° el., den man als die mittlere Stromflußphase bezeichnet. Bei einem Wert von 90° el. ergibt sich für das Drehmoment T des Motors ein Maximum, und deshalb versucht man, diesen Wert einzuhalten.

Fig. 5a zeigt die induzierte Spannung u_{ind}, die vom Rotormagneten 35' der Fig. 4 bei seiner Drehung in der Wicklung W induziert wird. Fig. 5B zeigt den Strom i, der z.B. während eines Stromflußwinkels von 60° el. in die Wicklung W fließt und der also in Fig. 4 bei einer Stromflußphase von 120° beginnt und bei einer Stromflußphase von 60° endet. Am Beginn eines solchen Stromimpulses i, wie er in Fig. 5b dargestellt ist, steht eine Kommutierung, ebenso an seinem Ende, wie in Fig. 5 durch die Beschriftung dargestellt. Bei dem Motor nach den Fig. 1 bis 5 haben die Stromimpulse meist eine Länge von 60° el., d.h. pro Drehung von 360° el. werden den Strängen 31, 32, 33 insgesamt sechs solche Stromimpulse zugeführt, immer einer anschließend an den vorhergehenden, weshalb man den Motor nach Fig. 1 und 2B auch als dreisträngigen, sechspulsigen Motor bezeichnet. Es ist darauf hinzuweisen, daß die Erfindung nicht auf derartige Motoren beschränkt ist, sondern sich in gleicher Weise auch für Motoren mit anderen Strangzahlen und anderen Pulszahlen eignet, z.B. für dreisträngige, dreipulsige Motoren. Für das Verständnis erscheint es aber zweckmäßig, die Erfindung an einem spezifischen Beispiel zu beschreiben.

Es ist ferner auch darauf hinzuweisen, daß durch Regelvorgänge die Stromimpulse i auch kürzer als 60° el. werden können, z.B. durch eine Drehzahlregelung oder eine PWM-Steuerung.

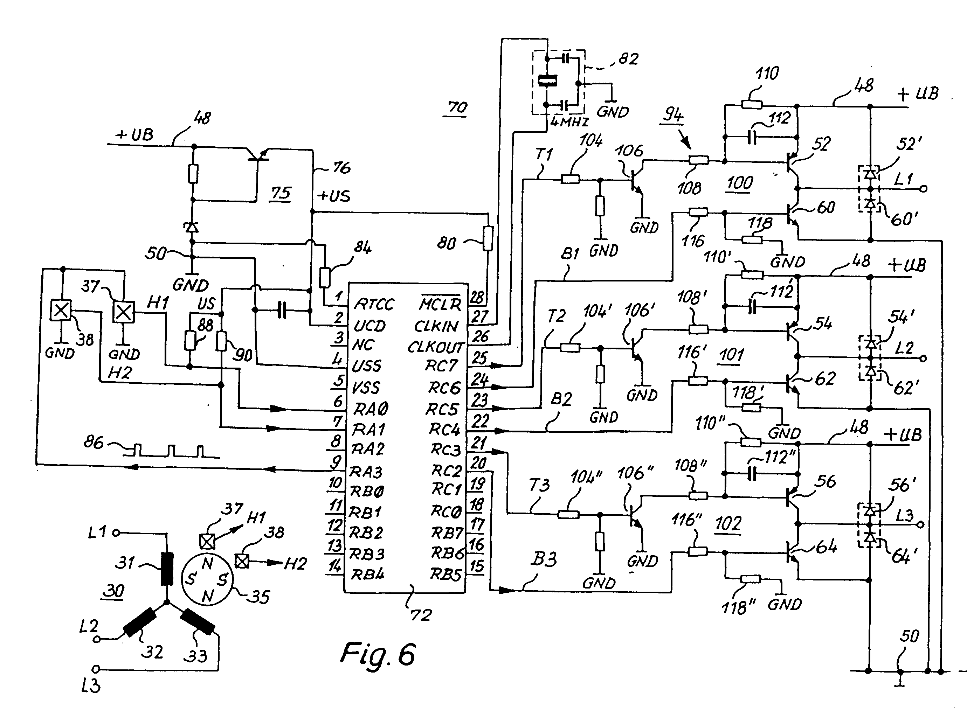

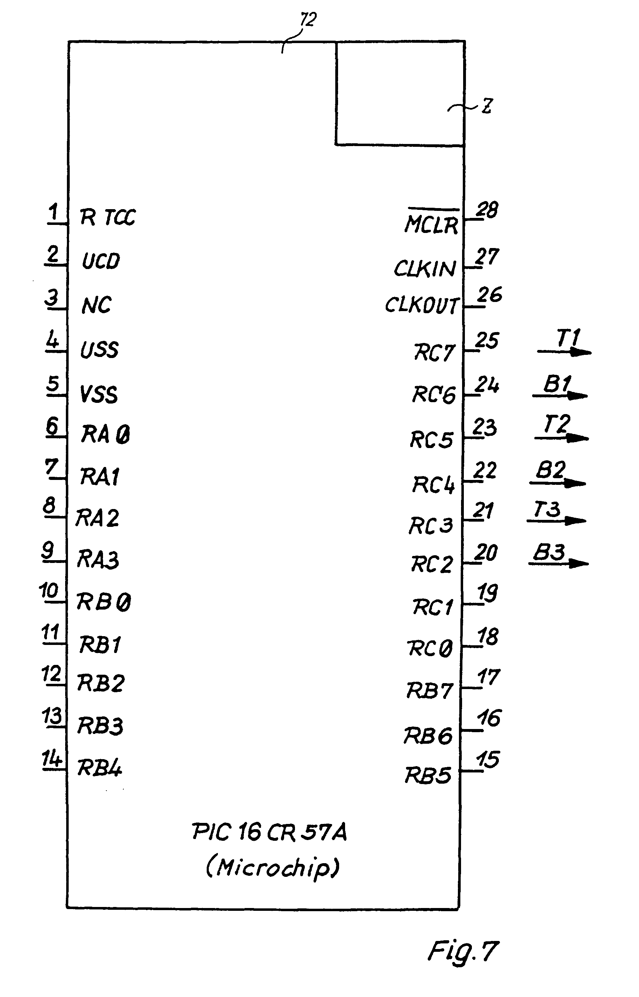

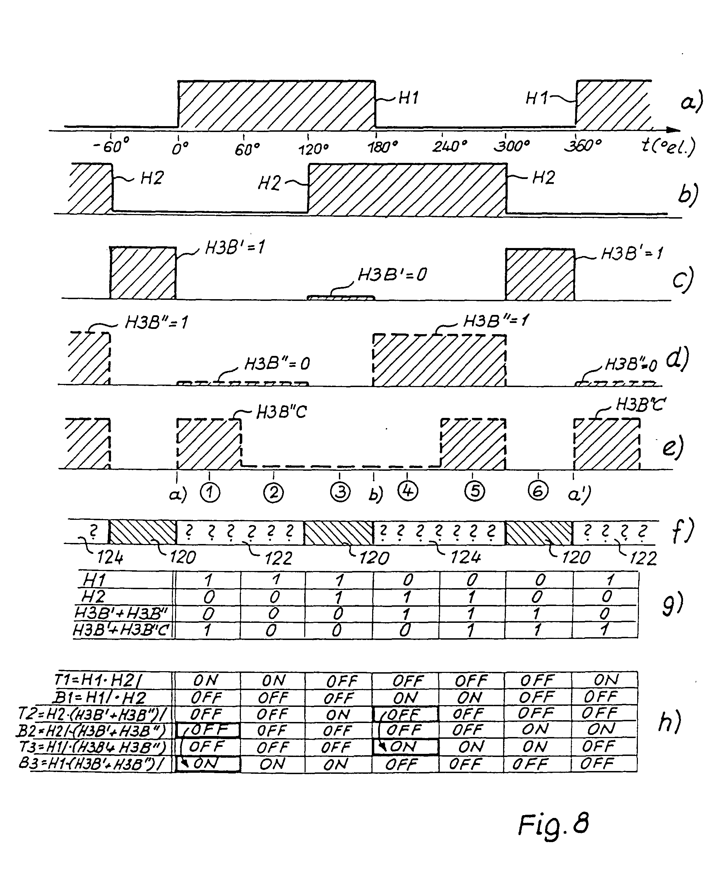

Fig. 6 zeigt ein Schaltbild einer erfindungsgemäßen Motoranordnung 70. Der eigentliche Motor 30 ist ebenfalls ein dreisträngiger, sechspulsiger Motor und ist aus Platzgründen in Fig. 6 unten links dargestellt.

Das Besondere an der Motoranordnung 70 ist, daß sie nur die zwei Rotorstellungssensoren 37 und 38 der Fig. 1 benötigt, welche die Signale H1 und H2 liefern, nicht aber den dritten Rotorstellungssensor 39, der hier weggelassen wurde.

Nun benötigt man aber, wie soeben ausführlich erläutert, für die Information über die Rotorstellung immer ein Triplet von digitalen Signalen H1, H2, H3, z.B. 100, oder 001, und das dritte Signal H3 wird deshalb intern in der Motoranordnung 70 aus anderen Informationen berechnet. Man kann es deshalb auch als "virtuelles" Rotorstellungssignal bezeichnen. Anhand dieses virtuellen Signals H3B, und der real existierenden Signale H1 und H2 von den vorhandenen Sensoren 37 und 38, kann dann die Kommutierung des Motors 70 genauso gesteuert werden, wie das bei den Fig. 1 bis 5 in großer Ausführlichkeit beschrieben wurde.

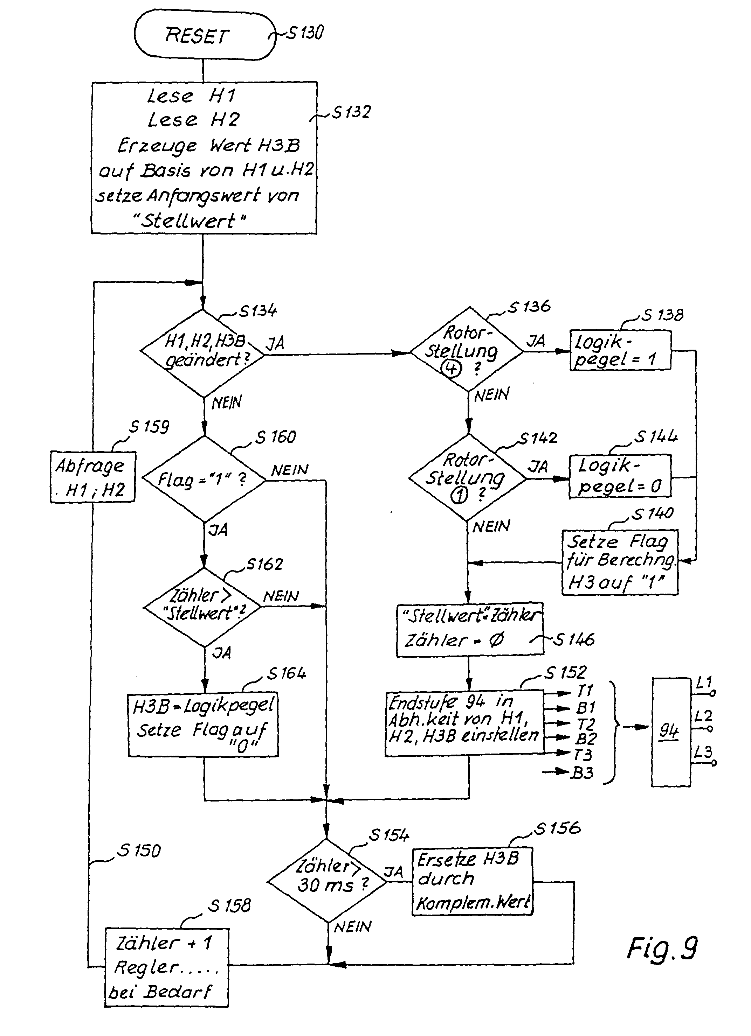

Die Anordnung 70 nach Fig. 6 verwendet einen Mikroprozessor (µP) 72, der in Fig. 7 vergrößert dargestellt ist. Fig. 7 zeigt die Anschlüsse 1 bis 28 dieses µP und deren vom Hersteller (MicroChip) gewählte Bezeichnungen, und der Leser wird zur Information hierauf, und auf die zugehörigen Datenblätter, verwiesen. Der µP 72 enthält auch ein ROM, in dem sich das verwendete Programm zur Steuerung des µP befindet, und ein RAM zur Speicherung von flüchtigen Daten, z.B. von Grenzwerten für einen Zähler, etc. Bei diesem µP handelt es sich um einen RISC-Prozessor. Naturgemäß können hier vielerlei Mikroprozessoren verwendet werden, wobei das Hauptziel ist, einen preiswerten µP mit niedrigem Stromverbrauch zu verwenden, der den Temperatoren in einem Motor gewachsen ist. (Der µP 72 wird gewöhnlich direkt in das Gehäuse des Motors eingebaut und bildet einen Bestandteil desselben.)

Zur Stromversorgung des µP 72, ausgehend von der Plusleitung 48 dient eine geregelte Stromversorgung 75, die an ihrem Ausgang 76 eine Spannung + U_{S} von z.B. + 5 V liefert. Die Minusleitung 50 ist teilweise auch mit GND bezeichnet. Der Eingang 2 des µP 72 ist direkt mit diesem Ausgang 76 verbunden, und der Eingang 28 über einen Widerstand 80. An die Eingänge 26 und 27 ist, wie dargestellt, ein Schwingquarz 82 (z.B. 4 MHz) angeschlossen, der als Taktgenerator für den µP 72 dient. Der Eingang 4 ist direkt mit der Minusleitung 50 verbunden, der Eingang 1 über einen Widerstand 84, z.B. 100 kΩ. Der Ausgang des Hall-IC 37 ist mit dem Eingang 6 verbunden und führt diesem das Signal H1 zu. Der Ausgang des Hall-IC 38 ist mit dem Eingang 7 verbunden und führt diesem das Signal H2 zu. Die Pluseingänge der Hall-ICs 37 und 38 sind miteinander und mit dem Anschluß 9 des µP 72 verbunden. Sie erhalten von dort periodische Stromimpulse 86 mit einer Dauer von z.B. 7 µs und einem zeitlichen Abstand von z.B. 50 µs. Durch diese Stromimpulse 86 werden die Hall-ICs 37 und 38 immer nur kurzzeitig eingeschaltet und liefern dann kurzzeitig die Signale H1 und H2, die im µP 72 bis zum nächsten Stromimpuls 86 gespeichert und beim nächsten Stromimpuls 86 durch die dann entstehenden neuen Signale H1 und H2 ersetzt werden. Über Widerstände 88, 90 (z.B. je 22 kΩ), die als Pullup-Widerstände bezeichnet werden, sind die Eingänge 6 und 7 des µP 72 mit dem Ausgang 76 des Spannungsreglers 75 verbunden.

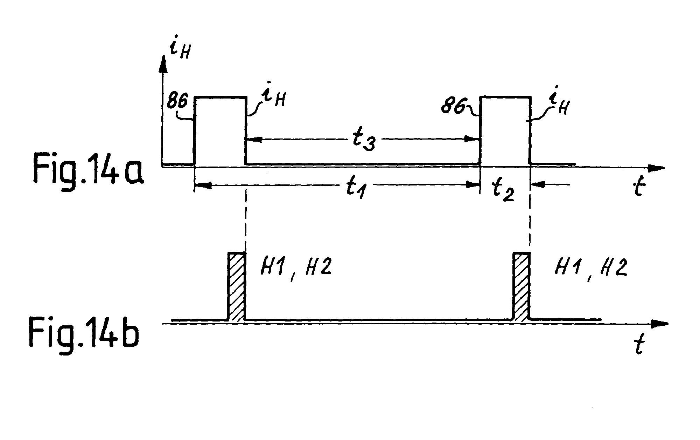

Fig. 14a zeigt die Erzeugung der Stromimpulse 86 durch die Hall-ICs 37 und 38. Die Impulsdauer t₂ beträgt z.B. 7 µs, der Impulsabstand t₁ z.B. 50 µs. Die Ablesung und Speicherung der Signale H1, H2 erfolgt z.B. während der letzten 2 µs der Impulse 86, wie in Fig. 14b dargestellt. Da die Hall-ICs 37, 38 auf diese Weise während z.B. 80 % der Gesamtzeit stromlos sind, ergibt sich eine entsprechende Einsparung von Energie. Da die Abfrage gemäß Fig. 14b z.B. 10000 bis 20000 Mal pro Sekunde erfolgt, stehen auch bei höheren Drehzahlen die Hallsignale H1 und H2 genügend häufig zur Verfügung, um eine exakte Kommutierung zu ermöglichen.

Der Ausgang 25 des µP 72 liefert im Betrieb das Signal T1, der Ausgang 24 das Signal B1, der Ausgang 23 das Signal T2, der Ausgang 22 das Signal B2, der Ausgang 21 das Signal T3, und der Ausgang 20 das Signal B3, wie in Fig. 6 dargestellt. Diese Signale dienen, wie bei Fig. 2B, zur Steuerung einer Vollbrückenschaltung 94, deren prinzipieller Aufbau Fig. 2B entspricht, d.h. die Signale T1, B1, T2, B2, T3 und B3 werden in genau derselben Weise aus den Signalen H1, H2 und dem (virtuellen) Signal H3B berechnet, wie das anhand der Fig. 1 bis 5 bereits ausführlich beschrieben wurde.

Die Vollbrückenschaltung nach Fig. 6 hat denselben prinzipiellen Aufbau wie die Vollbrückenschaltung 44 der Fig. 2B. Deshalb werden für gleiche oder gleichwirkende Teile dieselben Bezugszeichen verwendet und gewöhnlich nicht nochmals beschrieben.

Wie Fig. 6 zeigt, enthält die Brückenschaltung 94 drei Teile 100, 101 und 102 mit identischem Aufbau. Deshalb wird im folgenden nur der Teil 100 beschrieben. Die entsprechenden Bauteile des Teils 101 erhalten dasselbe Bezugszeichen mit einem nachgestellten Apostroph, diejenigen des Teils 102 mit zwei nachgestellten Apostrophen.

Das Signal T1 wird über einen Widerstand 104 der Basis eines npn-Transistors 106 zugeführt, dessen Emitter mit der Minusleitung 50 (GND) und dessen Kollektor über einen Widerstand 108 mit der Basis des pnp-Transistors 52 verbunden ist, dessen Emitter über einen Widerstand 110 und einen dazu parallelgeschalteten Kondensator 112 (z.B. 4,7 kΩ und 1 nF) mit der Basis verbunden ist. Der Widerstand 110 und der Kondensator 112 bilden ein RC-Glied und verlangsamen die Schaltvorgänge des Transistors 52, um Abschaltspitzen und Funkstörungen zu vermeiden.

In gleicher Weise wird das Signal T2 über den Widerstand 104' der Basis des Transistors 106' und das Signal T3 über den Widerstand 104" der Basis des Transistors 106" zugeführt.

Wenn das Signal T1 am Ausgang 25 des Mikroprozessors 72 den logischen Wert "1" annimmt, wird der Transistor 106 leitend und bewirkt einen Basisstrom im oberen Brückentransistor 52, so daß auch dieser leitend wird. Wird umgekehrt das Signal T1 niedrig, nimmt also den logischen Wert "0" an, so werden die Transistoren 106 und 52 gesperrt.

Dasselbe gilt analog für das Signal T2 am Ausgang 23, bzw. das Signal T3 am Ausgang 21 des Mikroprozessors 72.

Das Signal B1 vom Mikroprozessor 72 wird über einen Widerstand 116 (z.B. 4,7 kΩ) direkt der Basis des Transistors 60 zugeführt. Diese ist ihrerseits über einen Widerstand 118 (z.B. 4,7 kΩ) mit der Minusleitung 50 verbunden.

Wenn also das Signal B1 am Ausgang 24 des Mikroprozessors 72 den logischen Wert "1" annimmt, wird der Transistor 60 leitend, und wenn es den Wert "0" annimmt, wird dieser Transistor gesperrt. Analoges gilt für die Signale B2 und B3, was keiner Erläuterung bedarf, da die Anordnungen im Aufbau übereinstimmen.

Fig. 8a zeigt das Ausgangssignal H1 des Hall-IC 37, und Fig. 8b das Ausgangssignal H2 des Hall-IC 38. Die Darstellung entspricht exakt Fig. 3a und 3b, ebenso die Bezifferung der Drehstellungsbereiche unterhalb von Fig. 8e, die der Bezifferung der Drehstellungsbereiche gemäß Fig. 3c entspricht.

Aus Fig. 3a, b, c entnimmt man direkt, daß die Signale H1, H2, H3 niemals gleichzeitig die Werte 000 bzw. 111 annehmen können, und daraus folgt in Fig. 8c direkt, daß für den Bereich von -60° bis 0° el. sowie von 300° bis 360° el. (Drehstellungsbereich 6 im Kreis) das "virtuelle" Ausgangssignal H3P des (nicht vorhandenen; weggelassenen) dritten Sensors gleich "1" sein muß. Ebenso folgt daraus direkt, daß im Drehstellungsbereich 3 im Kreis (120° bis 180° el.) das Signal H3P = 0 sein muß. In diesen Drehstellungsbereichen liegt also eine vollständige Drehstellungsinformation vor, die es gestattet, den Motor mit vollem Drehmoment und in der richtigen Drehrichtung zu starten. Befindet sich also der Rotor in einer dieser Drehstellungen, die in Fig. 8f schwarz markiert und mit dem Bezugszeichen 120 bezeichnet sind, so ist ein problemloser Start möglich. Fig. 8f zeigt aber auch, daß zwischen diesen "sicheren" Bereichen 120 größere Drehstellungsbereiche 122, 124 liegen, die mit Fragezeichen markiert sind. Dies sind Drehstellungsbereiche, in denen die Drehstellungsinformation nicht ausreicht, um stets einen Start mit vollem Drehmoment zu gewährleisten.

In den Bereichen 122 ist das Rotorstellungssignal H1, H2 = 10, und in den Bereichen 124 ist das Rotorstellungssignal H1, H2 = 01, d.h. das Signal 10 bedeutet, daß sich der Rotor 35 irgendwo zwischen 0° und 120° el. befindet, und das Rotorstellungssignal 01 bedeutet, daß sich der Rotor 35 irgendwo zwischen 180° und 300° el. befindet. Diese Informationen sind nicht präzise genug für einen sicheren Start des Motors mit voller Leistung.

Aus Fig. 3c entnimmt man, daß im Bereich 122 das virtuelle Signal H3 entweder "1" oder "0" sein kann, und daß im Bereich 124 ebenfalls das virtuelle Signal H3 entweder "0" oder "1" sein kann.

Diese Unsicherheit hat bislang die Fachwelt veranlaßt, bei solchen Motoren stets drei Sensoren zu verwenden, wie sie Fig. 1 zeigt, um einen sicheren Start und anschließenden Betrieb des Motors zu gewährleisten. Bei der vorliegenden Erfindung wird dieser sichere Start und Betrieb auch gewährleistet, wenn einer der drei Hallsensoren weggelassen wird. Dabei spielt es für die Erfindung keine Rolle, welcher dieser drei Sensoren dies ist. Auch läßt sich die Erfindung auf andere elektronisch kommutierte Motoren übertragen, bei denen eine größere Zahl von Rotorstellungssensoren benötigt wird, um dort mindestens einen dieser Sensoren wegzulassen und durch das Programm in einem Mikroprozessor zu ersetzen.

Die Erfindung geht hier folgenden Weg: Für den Drehstellungsbereich 122 wird - für die hier dargestellte Drehrichtung - als Schätzwert für das virtuelle Signal H3B"der Wert "0" gewählt, wie in Fig. 3d dargestellt, und für den Drehstellungsbereich 124 wird als Schätzwert für das virtuelle Signal H3B" der Wert "1" gewählt, vgl. Fig. 3d. Dies ist also für diese Drehrichtung der Komplementärwert von H1.

Befindet sich also der Rotor 35 beim Start im Drehstellungsbereich ② (61 bis 120° el.), so erzeugt der µP 72 die richtige Drehstellungsinformation, da dann die Signalkombination H1, H2, H3B = 100 richtig ist, und der Start verläuft normal.

Dasselbe gilt, wenn sich der Rotor 35 beim Start im Drehstellungsbereich ⑤ (241 bis 300° el.) befindet. Auch hier erzeugt der µP 72 die richtige Drehstellungsinformation H1, H2, H3B = 011, und der Start verläuft normal mit vollem Drehmoment.

Damit verbleiben also noch die Drehstellungsbereiche ① (1 bis 60° el.) und ④ (181 bis 240° el.), für die der µP 72 - infolge der Schätzung für den Wert H3B - eine falsche Drehstellungsinformation erhält, in specie:

Wenn sich der Rotor 35 im Drehstellungsbereich ① (1 bis 60° el.) befindet, erzeugt der Mikroprozessor die (falsche) Drehstellungsinformation H1, H2, H3B = 100, die eigentlich für den Drehstellungsbereich ② (61 bis 120° el.)zutrifft. Dadurch wird zwar beim Start ein Antrieb des Rotors 35 in der richtigen Drehrichtung bewirkt, aber mit einem reduzierten Drehmoment, das umso schwächer wird, je näher sich der Rotor 35 beim Start bei der Drehstellung 0° el. befindet, die in Fig. 8e mit a) bezeichnet ist.

Wenn sich der Rotor 35 im Drehstellungsbereich ④ (181 bis 240° el.) befindet, erzeugt der µP 72 die (falsche) Drehstellungsinformation H1, H2, H3B = 011, die eigentlich für den Drehstellungsbereich ⑤ (241 bis 300 ° el.) zutrifft. Dadurch wird zwar beim Start ein Antrieb des Rotors 35 in der richtigen Drehrichtung bewirkt, aber mit einem reduzierten Drehmoment, das umso schwächer wird, je näher sich der Rotor 35 beim Start bei der Drehstellung 180° befindet, die in Fig. 8e mit b) bezeichnet ist.

Die Stellungen a) und b), also 0° el. und 180° el., sind also die Drehstellungen, die hier beim Start das meiste Kopfzerbrechen bereiten, denn ein Motor muß selbstverständlich aus allen Drehstellungen sicher starten können, auch wenn diese Drehstellungen in der Praxis vielleicht nur selten vorkommen.

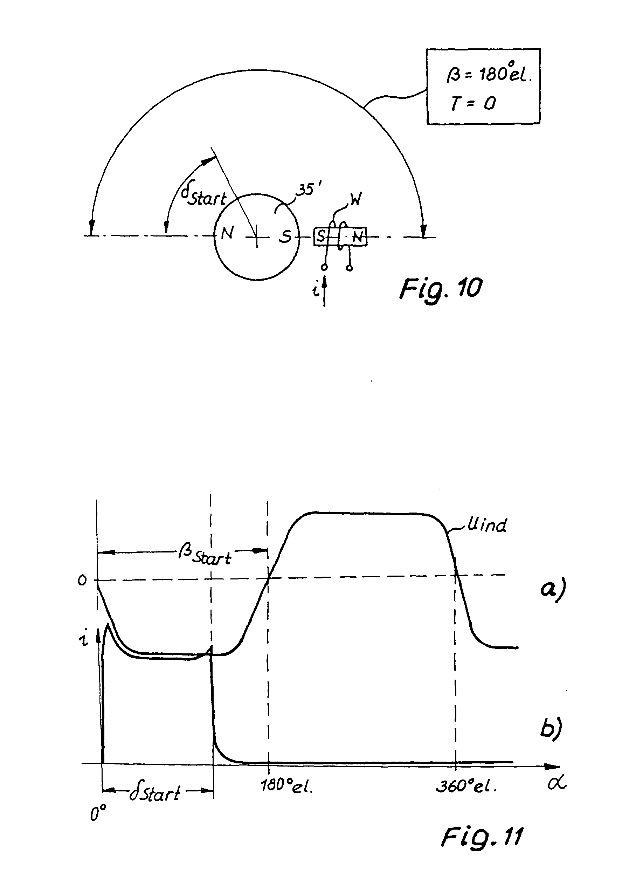

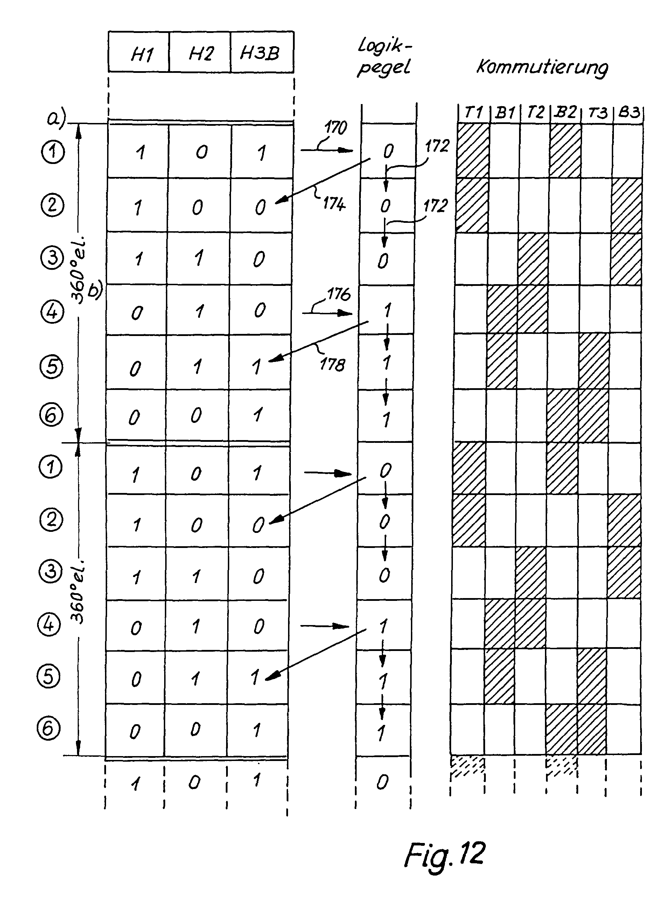

Diese Startprobleme werden anhand der Fig. 10 und 11 an einem vereinfachten Modell erläutert, um auch dem Digitaltechniker ein Verständnis der Erfindung zu ermöglichen.

Der Start in einer der Drehstellungen a) und b) entspricht der Anordnung nach Fig. 10, d.h. die Stromflußphase beim Einschalten beträgt volle 180° el., und einem Südpol des Stators (Wicklung W) liegt ein Südpol des Rotors 35' direkt gegenüber. Ersichtlich kann in dieser Stellung kein Drehmoment auf den Rotor 35' erzeugt werden, auch wenn der Strom i in der Wicklung W sehr groß wird.

Diese Drehstellung ist die Stellung, in der gemäß Fig. 11a die induzierte Spannung u_{ind} den Wert 0 hat. Dort, wo diese Spannung den Wert 0 hat, kann der Motor kein Drehmoment erzeugen.

Wird der Motor in Fig. 11 eingeschaltet, wenn sein Drehwinkel alpha z.B. 5° el. beträgt, so wird ein - wenn auch sehr schwaches - Drehmoment erzeugt, da die Stromflußphase dann nur 175° el. beträgt, und der Strom i wird - ohne Kommutierung - bis zum Winkel alpha = 120° el. aufrechterhalten. Kommutiert wird erstmals bei der Drehstellung 120° el., und ab da liegt die sichere Drehstellungsinformation H1, H2, H3B = 110 vor, so daß der Motor sicher anlaufen kann, wenn er die "Durststrecke" von alpha = 0° bis 60° el. überwunden hat.

Analoges gilt für den Anlauf an der Stelle b).

Befindet sich der Rotor 35 beim Anlauf an der Stelle 1° el. oder 181° el., so kann es sein, daß das erzeugte Drehmoment aus den erläuterten Gründen so niedrig ist, daß kein Anlauf stattfinden kann.

In diesem Fall überwacht der µP 72, ob innerhalb einer vorgegebenen Zeitspanne von z.B. 30 ms eine Kommutierung stattfindet, d.h., ob sich eines der Signale H1 oder H2 ändert. Ist dies nicht der Fall, so bedeutet dies, daß der Motor nicht angelaufen ist, also sich in der Nähe der Stellung a) oder der Stellung b) befinden muß.

Aus den Signalen H1 und H2 weiß der µP 72, ob sich der Rotor 35 im Drehstellungsbereich 122 (1° bis 120° el.) befindet, oder ob er sich im Drehstellungsbereich 124 (181 bis 300° el.) befindet, d.h. er weiß, daß der nichterfolgende Start entweder eine Folge der Drehstellung a) (H1, H2 = 10) ist, oder eine Folge der Drehstellung b) (H1, H2 = 01). Im Falle H1, H2 = 10 ändert der µP 72 in diesem Fall das virtuelle Signal von H3B" = 0 auf den komplementären Wert H3B"C = 1. Dadurch wird sofort ein Anlauf mit vollem Drehmoment möglich, da nun die korrekte Information über die Rotorstellung und damit die Situation gemäß Fig. 4 und 5 vorliegt.

Im Falle H1, H2 = 01 ändert der µP 72 bei Nichtanlauf das virtuelle Signal von H3B" = 1 auf den komplementären Wert H3B"C = 0, der in Fig. 8e dargestellt ist. Dadurch wird ebenfalls sofort ein Anlauf mit vollem Drehmoment möglich, da jetzt die korrekte Information über die Rotorstellung und damit die Situation gemäß Fig. 4 und 5 vorliegt.

Der erfindungsgemäße Motor startet also in den meisten Fällen direkt und ohne Verzögerung. Im Bereich der Rotorstellungen a) und b) kann sich aus den erläuterten Gründen eine Startverzögerung von z.B. 30 ms ergeben, die aber in der Praxis nicht stört und nicht bemerkbar ist. Ist der Motor einmal angelaufen, so wird die Drehung auf jeden Fall aufrechterhalten, und wie dies in optimaler Form geschieht, wird weiter unten ausführlich erläutert. Zunächst soll aber das Flußdiagramm der Fig. 9 erläutert werden, mit dessen Hilfe der Anlauf sicher bewerkstelligt wird, obwohl anstelle von drei Rotorstellungssensoren nur deren zwei verwendet werden.

Fig. 9 zeigt das Flußdiagramm für die Kommutierung des Motors 30 der Fig. 6. Dieses Flußdiagramm ist nur für eine Drehrichtung dargestellt.

Beim Einschalten des Motors 30 erfolgt zunächst im Schritt S130 ein Reset-Vorgang, der sogenannte Power Up Reset. Hierdurch werden die diversen Register des µPs 72, sowie der Programmzähler, auf 0 gestellt.

Im Schritt S132 erfolgt eine Initialisierung. Die Werte H1 und H2 der Hall-IC's 37 und 38 werden abgelesen, indem diesen IC's vom µP 72 ein Stromimpuls 86 zugeführt wird. Anschließend werden beide Werte im µP 72 gespeichert. Auf der Basis dieser beiden Werte wird vom µP 72 ein Wert für H3B errechnet, sofern dies möglich ist, d.h. für H1, H2 = 00 wird H3B' = 1 berechnet, und für H1, H2 = 11 wird H3B' = 0 berechnet. Für die übrigen Wertepaare von H1, H2 wird H3B" = H1/ gesetzt, also der Komplementärwert von H1. Der berechnete Wert H3B setzt sich also zusammen aus H3B' und H3B", wobei nur H3B' gesicherte Wert sind, während H3B" einen optimierten Schätzwert darstellt.

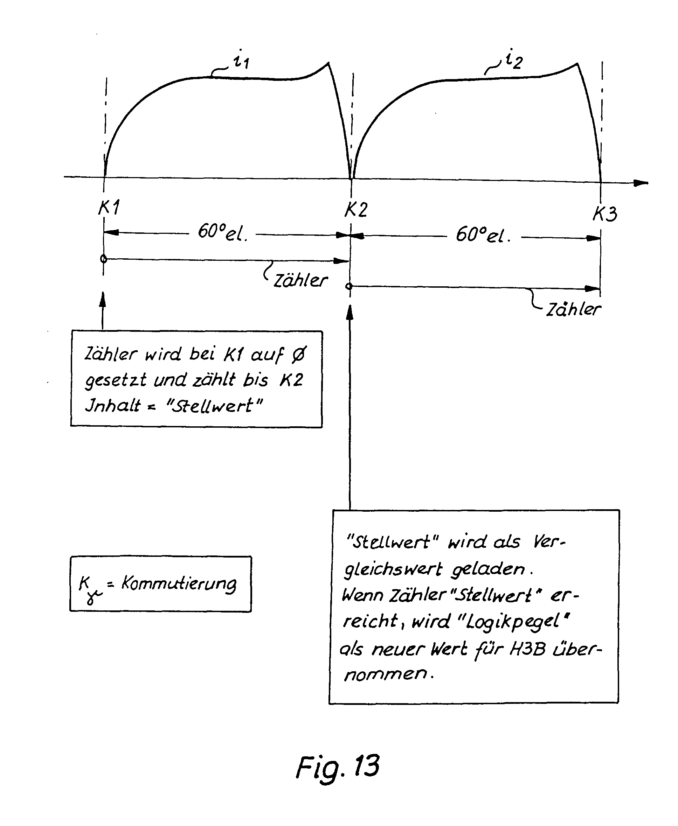

Ferner wird für die Variable "Stellwert" ein Anfangswert gesetzt. "Stellwert" entspricht im Betrieb der Zeit, die der Rotor 35 für eine Drehung von 60° el. benötigt. Dies wird nachfolgend anhand von Fig. 13 näher erläutert. Beim Start dreht sich der Motor 35 zunächst nur langsam, und deshalb muß dieser Anfangswert entsprechend groß sein. (Sobald sich der Rotor 35 dreht, wird die Größe "Stellwert" laufend gemessen, und es wird jeweils der aktuelle Wert verwendet.)

Beim Schritt S134 wird geprüft, ob sich H1, H2 oder H3B geändert haben. Dies ist beim Start immer der Fall, so daß das Programm zum Schritt S136 geht. Dort wird geprüft, ob sich der Rotor 35 im Rotorstellungsbereich ④ (Fig. 8e) befindet, d.h. ob sich das Signal H1 von "1" nach "0" geändert hat. Ist dies der Fall, so wird im Schritt S138 ein Logikpegel auf "1" gesetzt. (Der Logikpegel ist eine Variable, nämlich ein bistabiler Flipflop, der nur die Werte "0" oder "1" einnehmen kann.) Befindet sich der Rotor im Bereich ④, so wird der Logikpegel im Schritt S138 zu "1", und im Schritt S140 wird ein Flag auf "1" gesetzt, das anzeigt, daß in den nachfolgenden Schritten S162, S164 der Wert für H3B geändert werden soll, wenn eine bestimmte Bedingung erfüllt ist.

Wird im Schritt S136 festgestellt, daß sich der Rotor nicht im Rotorstellungsbereich ④ befindet, so geht das Programm zum Schritt S142 und prüft, ob sich der Rotor 35 im Bereich ① befindet, d.h. ob sich der Wert H1 von "0" nach "1" geändert hat. Falls ja, wird im Schritt S144 der Logikpegel auf "0" gesetzt, und es wird anschließend im Schritt S140 das Flag auf "1" gesetzt, um anzuzeigen, daß in den folgenden Schritten S162, S164 der Wert für H3B geändert werden soll.

Befindet sich der Rotor 35 nicht im Bereich ④ oder ①, so lautet sowohl beim Schritt S136 wie beim Schritt S142 die Antwort Nein, so daß der Logikpegel nicht verändert und im Schritt S140 das Flag nicht gesetzt wird.

Auf den Schritt S142 folgt der Schritt S146. Dort wird in einen Zähler Z des µP 72 die Variable "Stellwert" als oberer Grenzwert angegeben, und dieser Zähler Z wird auf "0" gesetzt. Dieser in Fig. 7 symbolisch angedeutete Zähler Z zählt also immer ab einem Kommutierungszeitpunkt, z.B. ab K1 in Fig. 13, wie dort durch einen Pfeil angedeutet; beim nächsten Kommutierungszeitpunkt K2 wird er erneut auf 0 gesetzt und zählt dann ab K2, und so zyklisch weiter.

Dieser Zähler Z kann auch ein separater Zähler sein, was den Vorteil hat, daß die Auflösung sehr gut wird und der Motor sehr ruhig läuft. Der Zähler kann aber auch - wie im Flußdiagramm dargestellt - die Zahl der Schleifen S150 zählen, die das Programm der Fig. 9 ab der Nullstellung im Schritt S146 durchläuft. Diese Schleifen S150 haben z.B. eine Dauer von 50 µs, d.h. wenn z.B. 10 Schleifen S150 durchlaufen werden, weiß man, daß eine Zeit von 10 x 50 µs = 0,5 ms abgelaufen ist. Voraussetzung hierfür ist natürlich, daß jeder Schleifendurchlauf S150, egal auf welchem Weg, dieselbe Zeit erfordert, d.h. im Flußdiagramm der Fig. 9 müssen dann entsprechende unwirksame, aber Zeit verbrauchende Befehle an einzelnen Stellen enthalten sein, z.B. NOP-Befehle, wie in den Fig. 22 und 23 der DE 44 41 372 A1 dargestellt.

Im Schritt S152 werden die Signale H1, H2 und H3B evaluiert, so, wie das in Fig. 2A dargestellt ist, um je nach Rotorstellung die richtige Kombination der Signale T1, T2, T3 und B1, B2, B3 zu erzeugen, wie sie in der Tabelle von Fig. 8h dargestellt ist. Wie diese Tabelle zeigt, ergeben sich die Anlaufschwierigkeiten im Bereich von 1 bis 60° el. dadurch, daß dort durch den (falschen) Schätzwert H3B" = 0 beim Anlauf das Signal B3 anstelle des (richtigen) Signals B2 erzeugt wird, und im Bereich von 181 bis 240° el. ergeben sich die Anlaufschwierigkeiten dadurch, daß durch den falschen Schätzwert H3B" = 1 anstelle des Signals T2 das (falsche) Signal T3 erzeugt wird. Durch die bereits beschriebene Bildung des komplementären Signals H3B"C wird dieser falsche Schätzwert von der Programmlogik innerhalb kurzer Zeit korrigiert, falls der Motor mit dem falschen Schätzwert nicht startet.

Die Signale T1 bis B3 werden, wie in Fig. 9 angedeutet, der Vollbrückenschaltung 94 zugeführt, an deren Ausgängen L1, L2, L3 der Motor 3 (Fig. 6, unten links) angeschlossen ist.

Im Anschluß an den Schritt S152 folgt der Schritt S154, wo der Zählerstand des Zählers Z geprüft wird. Sind mehr als 30 ms abgelaufen, so wird der geschätzte Wert H3B" als "falsch" interpretiert und im Schritt S156 durch seinen Komplementärwert H3B"C ersetzt, wodurch der Motor anschließend mit vollem Drehmoment startet, sofern er nicht mechanisch blockiert ist.

Im Schritt S158 wird der Zähler Z um den Wert 1 hinaufgezählt, und über die Schleife S150 geht das Programm zurück zum Schritt S134. Im Schritt S158, oder anschließend an ihn, können bei Bedarf auch Regelvorgänge stattfinden, wie in der DE 44 41 372 A1 beschrieben. Im Schritt S159 werden die Signale H1, H2 von den Hall-IC's 37, 38 erneut kurz abgefragt, indem ein Stromimpuls 86 (Fig. 6) zu ihnen geschickt wird, und diese Signale werden im µP 72 zwischengespeichert.

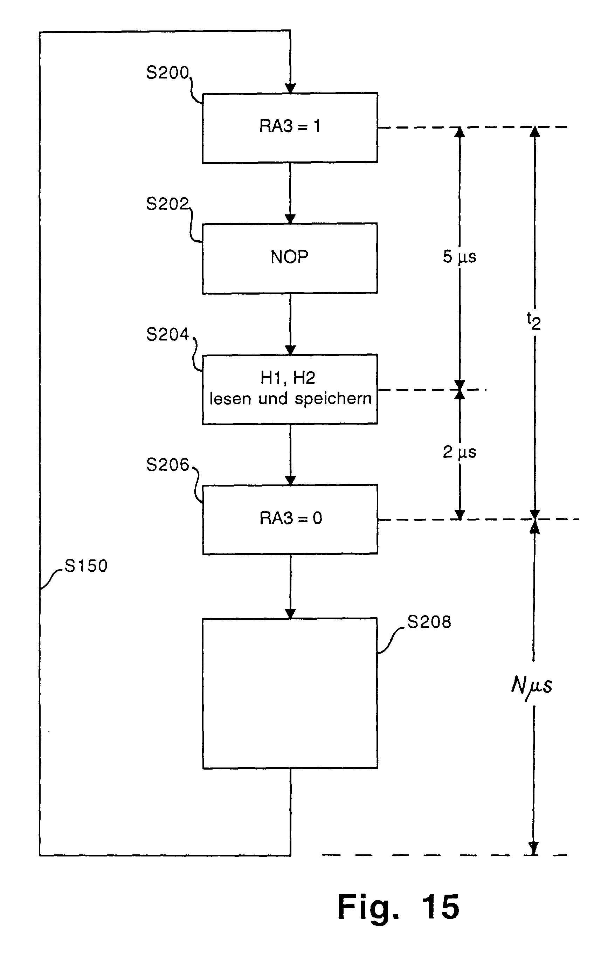

Dies ist in Fig. 15 dargestellt. Dort wird im Schritt S200 der Ausgang RA3 des µP 72 auf "1" geschaltet, also auf die Spannung der internen Plusleitung 76, wodurch ein Stromimpuls 86 (Fig. 14a) zu den Hall-ICs 37, 38 fließt. Erst wenn dieser Strom einige Mikrosekunden geflossen ist, können die Signale H1, H2 durch den µP 72 abgelesen werden, und deshalb erfolgt durch den Schritt S202 eine zeitliche Verzögerung, z.B. durch einige NOP-Befehle.

Nach Ablauf des Schrittes S202 werden im Schritt S204 die Signale H1, H2 gelesen und im µP 72 gespeichert. Anschließend wird im Schritt S206 der Ausgang RA3 des µP 72 wieder auf "0" gesetzt, d.h. die beiden Hall-ICs 37, 38 werden wieder stromlos gemacht, wobei sie keine Energie verbrauchen, was den Wirkungsgrad des Motors 30 erhöht.

Mit S208 sind in Fig. 15 generell die Schritte der Fig. 9 (von S134 bis S158) bezeichnet, in denen die Werte H1 und H2 ausgewertet werden. In Fig. 15 sind auch beispielhaft und schematisch die Zeiten angegeben, die für verschiedene Folgen von Schritten bei einem Durchlauf durch die Schleife S150 benötigt werden.

Sofern keiner der Werte H1, H2, H3B geändert wurde, geht das Programm zum Schritt S160 und prüft dort, ob das Flag (vgl. Schritt S140) gesetzt ist. Dieses Flag zeigt an, daß der Wert von H3B in Kürze geändert werden muß, weil eine Kommutierung bevorsteht. Ist dies nicht der Fall, d.h. Flag = 0, so geht das Programm direkt zum Schritt S154 und anschließend zum Schritt S158 und zurück durch die Schleife S150, wobei der Zähler Z um den Wert 1 erhöht wird.

Ist beim Schritt S160 das Flag = 1, so geht das Programm zum Schritt S162, wo geprüft wird, ob der Zähler Z bereits den Wert der Variablen "Stellwert" (vgl. Schritt S132) erreicht hat.

Ist im Schritt S162 der Zählerstand kleiner als "Stellwert", so geht das Programm zum Schritt S154, und anschließend wird im Schritt S158 der Zählerstand erneut um 1 erhöht. Die Kommutierung durch die Signale T1 bis B3 wird unverändert aufrechterhalten, solange sich an den Signalen H1, H2 und H3B nichts ändert.

Ist im Schritt S162 der Zählerstand größer als "Stellwert", so geht das Programm zum Schritt S164. Dort wird der bisherige Wert von H3B ersetzt durch den Wert "Logikpegel", und das bereits beschriebene Flag (Schritte S140 und S160) wird zurückgesetzt auf Flag = 0, damit die Schritte S162 und S164 anschließend nicht ständig durchlaufen werden.

Das Signal H3B hat nun einen neuen Wert, der der augenblicklichen Rotorstellung entspricht, so daß die Transistoren der Brückenschaltung 94 entsprechend dieser Rotorstellung richtig gesteuert werden. Nach jeder Änderung eines der Signale H1, H2, H3B werden nämlich die Schritte S136 etc. neu durchlaufen, und die Kommutierung des Motors 30 wird entsprechend geändert, wie sich das aus dem Flußdiagramm direkt ergibt.

Wenn das geschätzte Signal H3B" falsch ist und der Motor deshalb nicht anläuft, wird der Schritt S158 sehr oft durchlaufen, wodurch sich der Zählerstand des Zählers Z entsprechend erhöht, und wenn eine Zeit von mehr als 30 ms abgelaufen ist, bewirkt die Entscheidungsstufe S154 eine Umschaltung zum Schritt S156, wo dieser falsche Wert H3B" durch seinen Komplementärwert H3B"C ersetzt wird, z.B. der Schätzwert "0" durch den richtigen Wert "1", oder umgekehrt, wonach der Motor mit vollem Drehmoment sofort anläuft.

### Wie wird der laufende Motor richtig kommutiert?

Hierzu wird Bezug genommen auf Fig. 12, wo links die Signale H1, H2, H3B in ihrem (invariablen) zeitlichen Ablauf (für Rechtsdrehung des Motors 30) dargestellt sind. Man weiß also stets, daß z.B. auf das Signal 110 das Signal 010 folgen muß, und daß auf das Signal 101 das Signal 100 folgen muß.

Mit diesem Wissen ist es aber nicht getan, denn man muß auch wissen, zu welchem Zeitpunkt der Übergang zwischen diesen Signalen stattfindet, die sogenannte Kommutierung. Der Motor 30 liefert hierfür nur teilweise die entsprechenden Signale, denn es fehlt ja gerade der dritte Sensor, der diese Information liefern könnte.

Z.B. weiß man durch die Änderung des Signals H2, wann die Kommutierung vom Signal 100 zum Signal 110 stattfindet. Ebenso weiß man durch die Änderung des Signals H1, zu welchem Zeitpunkt die Kommutierung vom Signal 110 zum Signal 010 stattfindet. Da aber kein Sensor für das Signal H3B vorhanden ist, weiß man nicht, zu welchem Zeitpunkt die Kommutierung vom Signal 010 zum Signal 011 stattfindet, oder umgekehrt vom Signal 101 zum Signal 100.

Deshalb erscheint zunächst eine korrekte Kommutierung zwischen den letztgenannten Signalen nicht möglich.

Diesem Dilemma entgeht man mit dem Stratagem, das in Fig. 13 dargestellt ist. Dort soll der Zeitraum zwischen den Kommutierungszeitpunkten K1 und K2 dem Drehstellungsbereich ③ entsprechen. Sein Beginn K1 ist markiert dadurch, daß sich das Ausgangssignal H2 des Hall-IC 38 von "0" nach "1" ändert, und sein Ende K2 ist dadurch markiert, daß sich das Ausgangssignal H1 des Rotorstellungssensors 37 von "1" nach "0" ändert, vgl. Fig. 12. Diese beiden Zeitpunkte K1 und K2 sind also durch Signale vom Motor 30 exakt definiert. Die Zeitdauer von K1 bis K2 wird mit dem Zähler Z gemessen und als "Stellwert" für den nachfolgenden Zählvorgang verwendet. Diese Zeitdauer ist während einer Umdrehung des Rotors 35 praktisch invariant, d.h. sie schwankt allenfalls in ganz geringen Grenzen, und diese Schwankungen können, falls gewünscht, noch durch eine gleitende Mittelwertsbildung eliminiert werden.

Der Zeitpunkt K3, an dem sich das Signal H3B von "0" nach "1" ändert, kann, wie soeben erläutert, nicht dem Motor 30 entnommen werden, da der entsprechende Sensor fehlt, und deshalb wird dieser Zeitpunkt dann als erreicht angesehen, wenn, gemessen ab K2, der Zähler Z den Wert "Stellwert" (also die zeitliche Distanz zwischen K1 und K2) erreicht hat. Zum Zeitpunkt K3 wird also das virtuelle Signal H3B umgeschaltet und dadurch eine Kommutierung bewirkt, wobei der korrekte neue Wert für H3B aus den vorhergehenden Werten abgeleitet wird.

Fig. 12 zeigt, wie das geht. Z.B. wird im Rotorstellungsbereich ① durch den Programmschritt S142 der Logikpegel zu "0" gemacht, wie durch den Pfeil 170 der Fig. 12 angedeutet.Der Logikpegel "0" bleibt erhalten, bis er aktiv geändert wird, wie durch die Pfeile 172 angedeutet.

Beim Übergang vom Rotorstellungsbereich ① zum Bereich ② wird durch den Schritt S162 bestimmt, daß die Zeit "Stellwert" abgelaufen ist, und deshalb wird im Schritt S164 der bisherige Wert H3B = 1 ersetzt durch den Wert des Logikpegels, so daß H3B = 0 wird und die richtige Kommutierung zum richtigen Zeitpunkt K3 stattfindet. Dies ist in Fig. 12 durch den Pfeil 174 angedeutet. Im Schritt S152 wird kurz darauf auch der Motor 30 entsprechend diesem neuen Wert von H3B kommutiert.

Der umgekehrte Vorgang läuft bei der Kommutierung vom Rotorstellungsbereich ④ zum Bereich ⑤ ab. Im Bereich ④ wird durch die positive Abfrage im Schritt S136 nachfolgend im Schritt S138 der Logikpegel "1" erzeugt (Pfeil 176 in Fig. 12), und im Schritt S140 wird Flag = 1 gesetzt. Wird anschließend im Schritt S162 festgestellt, daß die Zeit "Stellwert" überschritten ist, so wird im Schritt S164 der bisherige Wert H3B = 0 durch den Logikpegel "1" ersetzt (Pfeil 178 in Fig. 12), und das Flagbit wird auf "0" rückgesetzt, d.h. H3B wird zum zeitlich richtigen Zeitpunkt von "0" nach "1" kommutiert, wodurch dann anschließend im Schritt S152 auch der Motor 30 richtig kommutiert wird.

Fig. 12 zeigt rechts den Kommutierungsablauf der Vollbrückenschaltung 94, der im richtigen Muster erfolgt, sobald der Motor 30 einmal läuft, also sobald sich die Signale H1 und H2 durch die Drehung des Rotors 35 ändern.

Durch die Erfindung (in Verbindung mit der Speisung der Hall-IC's 37, 38 durch die Stromimpulse 86) gelingt es, auch bei einem elektronisch kommutierten Motor geringer Leistung, z.B. mit 0,5 Watt abgegebener Leistung, eine akzeptablen Wirkungsgrad von ca. 30 % zu erreichen. Dies ist besonders wertvoll bei Motoren, die mit Solarstrom oder aus Batterien betrieben werden, oder bei Geräten mit dem Umweltsiegel (Green Seal), z.B. bei Lüftern für Computer, Monitore oder irgendwelche elektrischen Geräte.

Naturgemäß sind im Rahmen der Erfindung vielfältige Abwandlungen und Modifikationen möglich. Z.B. eignet sich die Erfindung in gleicher Weise für Motoren, die sowohl vorwärts wie rückwärts laufen müssen, wobei dann für den Rückwärtslauf die andere Folge der Rotorstellungssignale beachtet werden muß, d.h. die Tabelle in Fig. 12, links, ist dann von unten nach oben zu lesen, und die Ansteuerung der Stränge 31, 32, 33 des Motors 30 erfolgt dann entsprechend in anderer Weise, um ebenfalls eine mittlere Stromflußphase von 90° el. zu erreichen. Auch müssen dann andere Schätzwerte H3B" verwendet werden. Dies ist nicht dargestellt, da es für den Fachmann selbstverständlich ist.

Naturgemäß müssen bei Rückwärtslauf im Logikpegel (Schritte S138 und S144) die Werte "0" und "1" bei anderen Drehstellungen gespeichert werden, um eine korrekte Kommutierung zu erhalten. Dies ergibt sich direkt aus Fig. 12, denn die Änderung des Signals in "Logikpegel" muß immer zeitlich vor der Kommutierung erfolgen.

Die Erfindung eignet sich naturgemäß in gleicher Weise für einen dreipulsigen, dreisträngigen elektronisch kommutierten Motor, wie er z.B. dargestellt und beschrieben ist in dem Aufsatz von Rolf Müller, in asr-digest für angewandte Antriebstechnik, 1977, Seiten 27 bis 31.

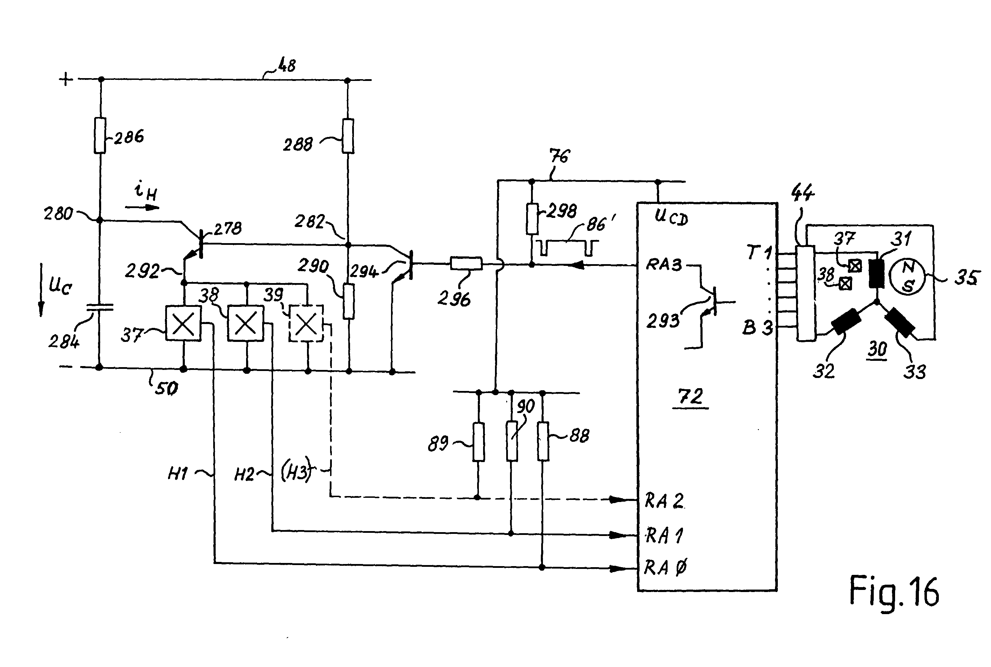

Bei Fig. 6 werden die Hall-ICs 37, 38 direkt über den µP 72 mit Strom versorgt. Verwendet ein Motor mehrere Hall-ICs, so könnte der µP 72 durch die hierfür erforderlichen Ströme überlastet werden. Fig. 16 zeigt eine Schaltung mit zwei Hall-ICs 37, 38, und ggf. einem dritten Hall-IC 39, die Hallsignale H1, H2 und ggf. H3 erzeugen, welche drei Eingängen RA0, RA1 bzw. RA2 des µP 72 zugeführt und dort als entsprechende digitale Signale zwischengespeichert werden. Diese Eingänge sind über je einen Widerstand 88, 90 bzw. 89 mit der internen Plusleitung 76 verbunden. Dies sind die sogenannten Pullup-Widerstände der Hall-ICs.

Die Hall-ICs 37, 38, 39 sind jeweils mit ihrem GND-Anschluß mit der Minusleitung 50 verbunden, und mit ihrem Plusanschluß 292 gemeinsam mit dem Emitter eines npn-Transistors 278 (z.B. BC847C), dessen Kollektor mit einem Knotenpunkt 280 und dessen Basis mit einem Knotenpunkt 282 verbunden ist.

Zwischen dem Knotenpunkt 280 und der Minusleitung 50 liegt ein Speicherkondensator 284 (z.B. 100 nF), der als Spannungspuffer für die Versorgung der Hall-ICs dient und der zwischen den zu den Hall-ICs fließenden Stromimpulsen iH über einen Widerstand 286 (z.B. 1 kΩ) von der Plusleitung 48 (z.B. + 40 V) aus aufgeladen wird. Durch die Hallimpulse nimmt die Spannung u_{C} am Kondensator 284 jeweils kurzzeitig ab, so daß diese Spannung u_{C} im Betrieb einen etwa sägezahnförmigen Verlauf hat.

Der Knotenpunkt 282 ist über einen Widerstand 288 (z.B. 39 kΩ) mit der Plusleitung 48 und über einen Widerstand 290 (z.B. 22 kΩ) mit der Minusleitung 50 verbunden. Das Potential des Punktes 282 wird also durch das Spannungsteilerverhältnis der Widerstände 288 und 290 bestimmt, und da der Transistor 278 als Emitterfolger geschaltet ist, bestimmt dieses Potential des Punktes 282 auch das Potential des Emitters des Transistors 278, das also stets etwas negativer ist als das Potential des Knotenpunkts 282. Dies bewirkt also eine konstante Spannung am Plusanschluß 292 der Hall-ICs 37, 38 und 39, solange diese Strom erhalten.

Parallel zum Widerstand 290 ist die Emitter-Kollektor-Strecke eines npn-Transistors 294 (z.B. BC847C) angeordnet, dessen Basis über einen Widerstand 296 (22 kΩ) mit dem Ausgang RA3 des µP 72 verbunden ist und von dort Steuersignale 86' erhält. Dieser Ausgang ist über einen Widerstand 298 (z.B. 22 kΩ) mit der internen Plusleitung 76 verbunden.

Solange der Transistor 294 leitend ist, weil er über den Widerstand 296 einen Basisstrom erhält, überbrückt er den Widerstand 290, so daß der Knotenpunkt 282 ein Potential erhält, das etwa dem Potential der Minusleitung 50 entspricht. Dadurch ist der Transistor 278 gesperrt, da er keinen Basisstrom erhält, und die drei Hall-ICs sind stromlos, so daß sich der Kondensator 284 über den Widerstand 286 aufladen kann.

Wird der Ausgang RA3 des µP 72 intern (durch einen nur schematisch angedeuteten Transistor 293) mit der Minusleitung 50 verbunden, so sperrt der Transistor 294, und der Punkt 282 nimmt ein Potential an, das dem Spannungsteilerverhältnis der Widerstände 288 und 290 entspricht, also z.B. +20 V. folglich erhält man am Emitter des Transistors 278 eine Spannung von z.B. +19 V, und es fließt also vom Kondensator 284 ein Strom i_{H} zu den Hall-ICs 37, 38 und ggf. 39, wobei die Spannung an diesen Hall-ICs unabhängig von der Ladespannung des Kondensators 284 und unabhängig von der angelegten Betriebsspannung des Motors auf dem Spannungsteilerpegel der Widerstände 288 und 290 gehalten wird. Die Stromimpulse iH werden an der Plusleitung 48 kaum spürbar und verteilen sich zeitlich, so daß der Motorstrom insgesamt erheblich abnimmt, da die Hall-ICs 37, 38, 39 statt eines kontinuierlichen Stroms von z.B. 45 mA nur noch einen Strom brauchen, dessen zeitlicher Mittelwert z.B. zwischen 5 und 10 mA liegt. Dadurch wird der Wirkungsgrad des Motors erheblich verbessert. Werden nur zwei Hall-ICs 37, 38 verwendet, so wird dieser zeitliche Mittelwert sogar noch niedriger, und der Wirkungsgrad wird noch besser.

Ein weiterer Vorteil der Schaltung nach Fig. 16 ist, daß die Ströme i_{H}, die zu den Hall-ICs fließen, die Spannung U_{CD} am µP 72 nicht beeinflussen und daher keine Störungen an diesem hervorrufen können. Man benötigt deshalb bei Fig. 16 nur einen relativ kleinen Kondensator 284 von z.B. 100 nF.

Der Motor 30 der Fig. 16 ist dreisträngig. Naturgemäß kann mit einer Schaltung gemäß Fig. 16 jeder beliebige elektronisch kommutierte Motor betrieben werden, der durch einen oder mehrere Rotorstellungssensoren gesteuert wird, z.B. ein zweipulsiger Motor mit nur einem Hall-IC. Durch die Erhöhung des Wirkungsgrades eignen sich erfindungsgemäße Motoren besonders für mobile Anwendungen, oder für Anwendungen mit Solarbetrieb. Insbesondere kann es sehr vorteilhaft sein, den Vorgang der Ablesung des Signals des Rotorstellungssensors mit einem programminternen Resetvorgang zu koppeln, der bei solchen Motoren bevorzugt an bestimmten Drehstellungen des Rotors erfolgt.

Anstatt bei der Verwendung mehrerer Hall-ICs alle gleichzeitig und gemeinsam mit Strom zu versorgen, wie das in Fig. 16 dargestellt ist, kann es auch vorteilhaft sein, die einzelnen Hall-ICs an separate Ausgänge des µP 72 anzuschließen, also den ersten Hall-IC an einen ersten Ausgang, den zweiten Hall-IC an einen zweiten Ausgang, etc., und diese Ausgänge separat durch das Programm zu steuern. Man kann dann diese Hall-ICs nacheinander sequentiell einschalten und abfragen und so den Strombedarf zeitlich verteilen. Solche und andere Modifikationen liegen im Rahmen der Erfindung.

## Patentansprüche

1. Verfahren zur Ansteuerung eines drei- oder mehrsträngigen, elektronisch kommutierten Motors, welcher zur Erfassung seiner Rotorstellung eine Anzahl von Rotorstellungssensoren aufweist, die um wenigstens 1 kleiner ist als die Zahl der für diese Strangzahl zur Steuerung der Kommutierung an sich erforderlichen Rotorstellungssensoren, mit folgenden Schritten:
a) Für die Rotorstellungsbereiche (120), bei denen eine ausreichende Zuordnung möglich ist, wird aus den Ausgangssignalen (H1, H2) der vorhandenen Rotorstellungssensoren (37, 38) ein virtuelles Rotorstellungssignal (H3B') abgeleitet;
b) für die Rotorstellungsbereiche (122, 124), bei denen keine ausreichende Zuordnung möglich ist, wird für das virtuelle Rotorstellungssignal ein Schätzwert (H3B") verwendet, der eine Funktion des Ausgangssignals (H1) mindestens eines der vorhandenen Rotorstellungssensoren (37, 38) ist.

2. Verfahren nach Anspruch 1, bei welchem beim Schritt b) als Schätzwert (H3B") der inverse Wert des Ausgangssignals (H1) eines der vorhandenen Rotorstellungssensoren (37) verwendet wird.

3. Verfahren nach Anspruch 2, bei welchem im Falle der Verwendung eines Schätzwertes dieser so gewählt wird, daß beim Start des Motors aus einer für den Anlauf ungünstigen Rotorstellung (a, b) die Stromflußphase (beta) auf einen größeren Wert eingestellt wird als in den Fällen, bei denen eine ausreichende Zuordnung des virtuellen Rotorstellungssignals zu den vorhandenen Ausgangssignalen möglich ist.

4. Verfahren nach einem oder mehreren der Ansprüche 1 bis 3, bei welchem im Anschluß an den Schritt b) der Schätzwert (H3B") für das virtuelle Rotorstellungssignal dann durch seinen Komplementärwert (H3B"C) ersetzt wird, wenn innerhalb einer vorgegebenen Zeitspanne keine Änderung des Ausgangssignals mindestens eines der vorhandenen Rotorstellungssensoren erfolgt ist.

5. Verfahren zur Ansteuerung eines drei- oder mehrsträngigen, elektronisch kommutierten Motors, welcher zur Erfassung seiner Rotorstellung eine Anzahl von Rotorstellungssensoren aufweist, die um wenigstens 1 kleiner ist als die Zahl der für diese Strangzahl zur Erfassung der Rotorstellung an sich erforderlichen Rotorstellungssensoren, mit folgenden Schritten:
a) im Betrieb, also bei sich drehendem Rotor, wird aus der Abfolge der die Kommutierung steuernden Signale (H1, H2, H3B) vorausberechnet, welchen Wert ein berechnetes Rotorstellungssignal (H3B) nach einer nachfolgenden Kommutierung haben wird;
b) der Zeitabstand ("Stellwert") zwischen zwei aufeinanderfolgenden Kommutierungszeitpunkten (Fig. 13: K1, K2), die durch eine Änderung der Rotorstellungssignale (H1, H2) vorhandener Rotorstellungssensoren (37, 38) definiert sind, wird gemessen;
c) dieser gemessene Wert ("Stellwert") wird ab dem nachfolgenden Kommutierungszeitpunkt (z.B. K2) mit dem zeitlichen Abstand von diesem Kommutierungszeitpunkt (z.B. K2) verglichen und bewirkt bei Erreichen des gemessenen Wertes (z.B. K3), daß der bisherige Wert des berechneten Rotorstellungssignals (H3B) durch den gemäß Schritt a) vorausberechneten Wert ersetzt wird.

6. Verfahren nach einem oder mehreren der vorhergehenden Ansprüche, bei welchem die Stromversorgung der Rotorstellungssensoren (37, 38) im Betrieb periodisch unterbrochen wird und während der Zeit ihrer Stromversorgung ihre Ausgangssignale (H1, H2) abgelesen und ausgewertet und/oder zwischengespeichert werden.

7. Verfahren nach Anspruch 6, bei welchem das Ausgangssignal (H1, H2) eines Rotorstellungssensors (37, 38) jeweils in der Endphase des Zeitabschnitts (t2) abgelesen wird, während dessen dieser Rotorstellungssensor eingeschaltet ist.

8. Verfahren nach Anspruch 6, bei welchem das Einschalten eines Rotorstellungssensors mit dem Ablauf eines Programms synchronisiert ist, welches in einem den Motor steuernden Mikroprozessor (72) abläuft.

9. Verfahren nach Anspruch 8, bei welchem das Programm Schleifen (S150) durchläuft und während jedes Schleifendurchlaufs ein Rotorstellungssensor mindestens einmal kurzzeitig mit Strom versorgt wird.

10. Elektronisch kommutierter Motor (30) mit mindestens drei Statorwicklungssträngen (31, 32, 33),
mit einem ersten Rotorstellungssensor (37) zur Erzeugung eines ersten Rotorstellungssignals (H1),
mit einem zweiten Rotorstellungssensor (38) zur Erzeugung eines zweiten Rotorstellungssignals (H2), welche beiden Rotorstellungssignale (H1, H2) die Identifizierung einer Teilmenge von Rotorstellungen zwecks Kommutierung der Ströme in den drei Strängen (31, 32, 33) ermöglichen, und mit einer von den Ausgangssignalen (H1, H2) der beiden Rotorstellungssensoren (37, 38) gesteuerten Anordnung (72) zur geschätzten Identifizierung einer weiteren Teilmenge von Rotorstellungen, um einen Anlauf des Motors (30) entgegen der richtigen Drehrichtung aus jeder Rotorstellung in den beiden Teilmengen auszuschließen.

11. Motor nach Anspruch 10, bei welchem Signalerzeugungsmittel vorgesehen sind, welche wenigstens einer vorgegebenen Rotorstellungs-Signalkombination der beiden Rotorstellungssensoren (37, 38) einen Schätzwert (H3B") für ein Signal zuordnen, welcher Schätzwert, in Kombination mit dem ersten und dem zweiten Rotorstellungssignal (H1, H2), die Identifizierungswahrscheinlichkeit für die Identifizierung von Rotorstellungen in der zweiten Teilmenge erhöht.

12. Motor nach Anspruch 11, bei welchem Verifizierungsmittel (S154) vorgesehen sind, welche die Verifizierung der Richtigkeit des Schätzwerts (H3B"), bzw. dessen Korrektur (H3B"C) bei Unrichtigkeit, steuern.

13. Motor nach Anspruch 12, bei welchem die Verifizierungsmittel ein Zeitglied (S154) aufweisen, welches überwacht, ob innerhalb einer vorgegebenen Zeitspanne nach dem Einschalten des Motors eine Änderung des ersten Rotorstellungssignals (H1) und/oder des zweiten Rotorstellungssignals (H2) auftritt.

14. Motor nach Anspruch 13, bei welchem die Verifizierungsmittel den Schätzwert (H3B") korrigieren, wenn innerhalb der vorgegebenen Zeitspanne keine Änderung des ersten und/oder des zweiten Rotorstellungssignals (H1 bzw. H2) auftritt.

15. Motor nach einem der Ansprüche 10 bis 14, bei welchem Mittel (S136, S138, S142, S144) zur Vorausberechnung eines Werts in einer für eine zukünftige Rotorstellung kennzeichnenden Signalkombination (H1, H2, H2B) auf Grund einer augenblicklich vorhandenen Signalkombination vorgesehen sind.

16. Motor nach Anspruch 15, bei welchem Mittel zur Erfassung und Speicherung des zeitlichen Abstands ("Stellwert") zwischen einer Änderung (K1) einer für eine erste Rotorstellung kennzeichnenden Signalkombination und einer darauffolgenden Änderung (K2) einer für eine nachfolgende Rotorstellung kennzeichnenden Signalkombination vorgesehen sind, und der vorausberechnete Wert ("Logikpegel"), oder ein von ihm abgeleiteter Wert, dann in die für eine Rotorstellung kennzeichnende Signalkombination (H1, H2, H3B) eingegeben wird, wenn nach dem Zeitpunkt (K2) der Änderung einer für eine bestimmte Rotorstellung kennzeichnenden Signalkombination eine Zeit verstrichen ist (Zeitpunkt K3), die diesem zeitlichen Abstand ("Stellwert"), oder einem von ihm abgeleiteten Wert, entspricht.

17. Motor nach einem oder mehreren der Ansprüche 10 bis 16, mit einem die Kommutierung des Motors steuernden Mikroprozessor (72), wobei ein Strom (iH) für die Betätigung mindestens eines in diesem Motor vorgesehenen Rotorstellungssensors (37, 38) durch den Mikroprozessor (72) wiederholt eingeschaltet und während einer die Einschalt-Zeitdauer (t2) übersteigenden Ausschalt-Zeitdauer (t3) ausgeschaltet wird.

18. Motor nach Anspruch 17, bei welchem der Mikroprozessor (72) interne Speichermittel zum Speichern des beim Einschalten eines Rotorstellungssensors (37, 38) erfaßten Rotorstellungssignals (H1, H2) aufweist.

19. Motor nach Anspruch 17 oder 18, bei welchem einem Rotorstellungssensor (37, 38) ein Speicherkondensator (284) zugeordnet ist, welcher während der Ausschaltzeit (t3) des Rotorstellungssensors (37, 38) aufgeladen wird und welcher während dessen Einschaltzeit (t2) einen Betriebsstrom für den Rotorstellungssensor liefert.

20. Motor nach Anspruch 19, bei welchem der Strom (iH) aus dem Speicherkondensator (284) dem mindestens einen Rotorstellungssensor (37, 38) über einen in Emitterschaltung betriebenen Transistor (278) zuführbar ist, dessen Basispotential vom Mikroprozessor (72) steuerbar ist und während der Stromzufuhr (zum Rotorstellungssensor) auf einem im wesentlichen konstanten Wert gehalten wird, um die Versorgungsspannung des mindestens einen Rotorstellungssensors im wesentlichen konstantzuhalten.

## Claims

1. Method for controlling an electronically commutated motor which has three or more phase windings and which for detecting its rotor position comprises a number of rotor position sensors which is smaller by at least one than the number of the rotor position sensors required per se for this number of phase windings for control of the commutation, with the following steps:
a) for the rotor position ranges (120) in which adequate assignment is possible, a virtual rotor position signal (H3B') is derived from the output signals (H1, H2) of the existing rotor position sensors (37, 38) ;
b) for the rotor position ranges (122, 124) in which no adequate assignment is possible, an estimated value (H3B") is used for the virtual rotor position signal which is a function of the output signal (H1) of at least one of the existing rotor position sensors (37, 38).

2. Method according to claim 1, in which in step b) the inverse value of the output signal (H1) of one of the existing rotor position sensors (37) is used as the estimated value (H3B").

3. Method according to claim 2, in which in the case of the use of an estimated value this is chosen so that when the motor is started from a rotor position (a, b) which is unfavourable for starting, the current flow phase (beta) is set to a greater value than in the cases in which adequate assignment of the virtual rotor position signal to the existing output signals is possible.

4. Method according to one or more of claims 1 to 3, in which following step b) the estimated value (H3B") for the virtual rotor position signal is replaced by its complementary value (H3B"C) when no change of the output signal of at least one of the existing rotor position sensors occurs within a predetermined period of time.

5. Method for controlling an electronically commutated motor which has three or more phase windings and which for detection of its rotor position comprises a number of rotor position sensors which is smaller by at least one than the number of rotor position sensors required per se for this number of phase windings for detection of the rotor position, with the following steps:
a) in operation, i.e. when the rotor is turning, the value which a calculated rotor position signal (H3B) will have after a following commutation operation is calculated in advance from the sequence of signals (H1, H2, H3B) controlling the commutation;
b) the interval of time ("set value") is measured between two successive commutation points (fig. 13: K1, K2) which are defined by a change of the rotor position signals (H1, H2) of existing rotor position sensors (37, 38);
c) from the following commutation point (e.g. K2) this measured value ("set value") is compared with the interval of time from this commutation point (e.g. K2) and on reaching the measured value (e.g. K3) ensures that the existing value of the calculated rotor position signal (H3B) is replaced by the value calculated in advance in accordance with step a).

6. Method according to one or more of the preceding claims, in which the power supply of the rotor position sensors (37, 38) is periodically interrupted while in operation and their output signals (H1, H2) are read and evaluated and/or temporarily stored during the time of their power supply.

7. Method according to claim 6, in which the output signal (H1, H2) of a rotor position sensor (37, 38) is read in each case in the end phase of the time segment (t2) during which this rotor position sensor is switched on.

8. Method according to claim 6, in which the switching on of a rotor position sensor is synchronised with the sequence of operations of a programme running in a microprocessor (72) controlling the motor.

9. Method according to claim 8, in which the programme passes through loops (S150) and during each passage through a loop a rotor position sensor is supplied briefly with current at least once.

10. Electronically commutated motor (30) with at least three stator phase windings (31, 32, 33), with a first rotor position sensor (37) for producing a first rotor position signal (H1), with a second rotor position sensor (38) for producing a second rotor position signal (H2), which rotor position signals (H1, H2) both allow identification of a part quantity of rotor positions for the purpose of commutation of the currents in the three phase windings (31, 32, 33), and with an arrangement (72) controlled with one of the output signals (H1, H2) of the two rotor position sensors (37, 38) for estimated identification of a further part quantity of rotor positions in order to prevent the motor (30) starting counter to the correct direction of rotation from each rotor position in the two part quantities.

11. Motor according to claim 10, in which signal production means are provided which assign an estimated value (H3B") for a signal to at least one predetermined rotor position signal combination of the two rotor position sensors (37, 38), which estimated value, in combination with the first and the second rotor position signal (H1, H2), increases the probability of identification for identification of rotor positions in the second part quantity.

12. Motor according to claim 11, in which verification means (S154) are provided which control the verification of the correctness of the estimated value (H3B") or its correction (H3B"C) when incorrect.

13. Motor according to claim 12, in which the verification means comprise a time member (S154) which monitors whether a change occurs in the first rotor position signal (H1) and/or the second rotor position signal (H2) within a predetermined period of time after switching on the motor.

14. Motor according to claim 13, in which the verification means correct the estimated value (H3B") if no change occurs in the first and/or the second rotor position signal (H1 or H2) within the predetermined period of time.

15. Motor according to one of claims 10 to 14, in which means (S136, S138, S142, S144) are provided for advance calculation of a value in a signal combination (H1, H2, H2B) **characterising** a future rotor position on the basis of a signal combination which is present momentarily.

16. Motor according to claim 15, in which means are provided for detecting and storing the interval of time ("set value") between a change (K1) in a signal combination **characterising** a first rotor position and a following change (K2) in a signal combination **characterising** a following rotor position, and the value calculated in advance ("logic level"), or a value derived from it, is introduced into the signal combination (H1, H2, H3B) **characterising** a rotor position when a time corresponding to this interval of time ("set value"), or a value derived from it, has elapsed (time K3) after the time (K2) of the change in a signal combination **characterising** a particular rotor position.

17. Motor according to one or more of claims 10 to 16, with a microprocessor (72) controlling the commutation of the motor, wherein a current (iH) for the operation of at least one rotor position sensor (37, 38) provided in this motor is repeatedly switched on by the microprocessor (72) and switched off for a switch-off time (t3) exceeding the switch-on time (t2).

18. Motor according to claim 17, in which the microprocessor (72) comprises internal storage means for storage of the rotor position signal (H1, H2) detected when a rotor position sensor (37, 38) is switched on.

19. Motor according to claim 17 or 18, in which a rotor position sensor (37, 38) has an associated storage capacitor (284) which is charged during the switch-off time (t3) of the rotor position sensor (37, 38) and which supplies an operating current for the rotor position sensor during its switch-on time (t2).

20. Motor according to claim 19, in which the current (iH) from the storage capacitor (284) can be fed to the at least one rotor position sensor (37, 38) by means of a transistor (278) which is operated in a grounded emitter circuit and the base potential of which is controllable by the microprocessor (72) and kept at an essentially constant value during the supply of current (to the rotor position sensor) in order to keep the supply voltage of the at least one rotor position sensor essentially constant.

## Revendications

1. Procédé pour la commande d'un moteur à commutation électronique triphasé ou polyphasé lequel présente, pour l'acquisition de la position de son rotor, un nombre de capteurs de position de rotor inférieur d'au moins 1 au nombre de capteurs de position normalement nécessaire avec ce nombre de phases pour la commande de la commutation, comportant les étapes suivantes :
a) pour les plages de positions de rotor (120) dans lesquelles une affectation suffisante est possible, on déduit des signaux de sortie (H1, H2) des capteurs de position de rotor présents (37, 38) un signal de position de rotor virtuel (H3B') ;
b) pour les plages de positions de rotor (122, 124) dans lesquelles une affectation suffisante n'est pas possible, on utilise comme signal de position de rotor virtuel une valeur estimative (H3B") qui est une fonction du signal de sortie (H1) d'au moins un des capteurs de position de rotor présents (37, 38).

2. Procédé selon la revendication 1 dans lequel on utilise à l'étape b) la valeur inverse du signal de sortie (H1) d'un des capteurs de position de rotor présents (37, 38) comme valeur estimative (H3B").

3. Procédé selon la revendication 2 dans lequel, en cas d'utilisation d'une valeur estimative, on choisit celle-ci de telle manière qu'au démarrage du moteur à partir d'une position de rotor (a, b) défavorable pour le démarrage la phase de conduction (bêta) est réglée sur une valeur plus grande que dans les cas où une affectation suffisante du signal de position de rotor virtuel aux signaux de sortie présents est possible.

4. Procédé selon une ou plusieurs des revendications 1 à 3 dans lequel à la suite de l'étape b) la valeur estimative (H3B") du signal de position de rotor virtuel est remplacée par sa valeur complémentaire (H3B"C) si pendant un laps de temps donné il ne s'est produit aucune modification du signal de sortie d'au moins un des capteurs de position de rotor présents.

5. Procédé pour la commande d'un moteur à commutation électronique triphasé ou polyphasé lequel présente, pour l'acquisition de la position de son rotor, un nombre de capteurs de position de rotor inférieur d'au moins 1 au nombre de capteurs de position normalement nécessaire avec ce nombre de phases pour l'acquisition de la position du rotor, comportant les étapes suivantes :
a) en fonctionnement, donc lorsque le rotor tourne, on calcule à l'avance, à partir de la suite des signaux commandant la commutation (H1, H2, H3B), la valeur qu'aura un signal de position de rotor (H3B) calculé après une commutation suivante ;
b) l'intervalle de temps (« valeur de réglage ») entre deux instants de commutation successifs (fig. 13 : K1, K2) qui sont définis par une modification des signaux de position de rotor (H1, H2) des capteurs de position de rotor présents (37, 38) est mesuré ;
c) cette valeur mesurée (« valeur de réglage ») est comparée à partir de l'instant de commutation suivant (p. ex. K2) avec l'espace de temps qui la sépare de cet instant de commutation (p. ex. K2) et provoque, lorsque la valeur mesurée est atteinte (p. ex. K3), le remplacement de la valeur précédente du signal de position de rotor (H3B) par la valeur calculée à l'avance conformément à l'étape a).

6. Procédé selon une ou plusieurs des revendications précédentes dans lequel l'alimentation électrique des capteurs de position de rotor (37, 38) est périodiquement interrompue en fonctionnement, leurs signaux de sortie (H1, H2) étant lus et évalués et/ou mis en mémoire tampon pendant la durée de leur alimentation électrique.

7. Procédé selon la revendication 6 dans lequel le signal de sortie (H1, H2) d'un capteur de position de rotor (37, 38) est lu chaque fois dans la phase finale de l'intervalle de temps (t2) pendant lequel ce capteur de position de rotor est mis en circuit.

8. Procédé selon la revendication 6 dans lequel la mise en circuit d'un capteur de position de rotor est synchronisée avec le déroulement d'un programme qui s'exécute dans un microprocesseur (72) qui commande le moteur.

9. Procédé selon la revendication 8 dans lequel le programme exécute des boucles (S150) et dans lequel pendant chaque itération un capteur de position de rotor est au moins une fois brièvement alimenté en courant.

10. Moteur à commutation électronique (30) comportant au moins trois enroulements statoriques (31, 32, 33),
avec un premier capteur de position de rotor (37) générant un premier signal de position de rotor (H1),
avec un deuxième capteur de position de rotor (38) générant un deuxième signal de position de rotor (H2), les deux signaux de position de rotor (H1, H2) permettant l'identification d'un sous-ensemble des positions de rotor aux fins de commutation des courants dans les trois enroulements (31, 32, 33), et avec un dispositif (72) commandé par les signaux de sortie (H1, H2) des deux capteurs de position de rotor (37, 38) servant à l'identification estimée d'un autre sous-ensemble des positions de rotor afin d'exclure un démarrage du moteur (30) dans le mauvais sens de rotation à partir de toute position du rotor dans les deux sous-ensembles.

11. Moteur selon la revendication 10 dans lequel il est prévu des moyens de génération de signaux qui affectent à au moins une combinaison de signaux de position de rotor donnée de deux capteurs de position de rotor (37, 38) une valeur estimative (H3B") pour un signal, laquelle valeur estimative, en combinaison avec les premier et deuxième signaux de position de rotor (H1, H2), augmente la probabilité d'identification des positions de rotor situées dans le deuxième sous-ensemble.

12. Moteur selon la revendication 11 dans lequel il est prévu des moyens de vérification (S154) qui commandent la vérification de l'exactitude de la valeur estimative (H3B") et sa correction (H3B"C) en cas d'inexactitude.

13. Moteur selon la revendication 12 dans lequel les moyens de vérification présentent un élément de temporisation (S154) qui surveille s'il se produit une modification du premier signal de position de rotor (H1) et/ou du deuxième signal de position de rotor (H2) dans un laps de temps donné après la mise sous tension du moteur.

14. Moteur selon la revendication 13 dans lequel les moyens de vérification corrigent la valeur estimée (H3B") s'il ne se produit aucune modification du premier et/ou du deuxième signal de position de rotor (H1 ou H2) dans le laps de temps donné.

15. Moteur selon l'une des revendications 10 à 14 dans lequel il est prévu des moyens (S136, S138, S142, S144) pour le calcul anticipé d'une valeur dans une des combinaisons de signaux (H1, H2, H2B) caractéristique d'une future position de rotor sur la base d'une combinaison de signaux actuellement présente.

16. Moteur selon la revendication 15 dans lequel il est prévu des moyens d'acquisition et de mémorisation de l'espace de temps (« valeur de réglage ») entre une modification (K1) d'une combinaison de signaux caractéristique d'une première position de rotor et une modification suivante (K2) d'une combinaison de signaux caractéristique d'une position de rotor suivante et dans lequel la valeur calculée à l'avance (« niveau logique »), ou une valeur déduite de celle-ci, est ensuite entrée dans la combinaison de signaux (H1, H2, H3B) caractéristique d'une position de rotor si après l'instant (K2) de la modification d'une combinaison de signaux caractéristique d'une certaine position de rotor s'est écoulé un temps (instant K3) qui correspond à cet espace de temps (« valeur de réglage ») ou à une valeur déduite de celui-ci.

17. Moteur selon une ou plusieurs des revendications 10 à 16 avec un microprocesseur (72) commandant la commutation du moteur dans lequel un courant (iH) pour la commande d'au moins un capteur de position de rotor (37, 38) prévu dans ce moteur est, de façon répétitive, mis en circuit et mis hors circuit pendant une durée de mise hors circuit (t3) supérieure à la durée de mise en circuit (t2).

18. Moteur selon la revendication 17 dans lequel le microprocesseur (72) présente des moyens de mémorisation internes pour la mise en mémoire du signal de position de rotor (H1, H2) acquis lors de la mise en circuit d'un capteur de position de rotor (37, 38).

19. Moteur selon la revendication 17 ou 18 dans lequel un condensateur de stockage (284) est affecté à un capteur de position de rotor (37, 38), lequel condensateur est chargé pendant le temps de mise hors circuit (t3) du capteur de position de rotor (37, 38) et délivre pendant le temps de mise en circuit (t2) de ce dernier un courant d'alimentation pour le capteur de position de rotor.

20. Moteur selon la revendication 19 dans lequel le courant (iH) issu du condensateur de stockage (284) peut être amené à l'un au moins des capteurs de position de rotor (37, 38) via un transistor (278) fonctionnant en émetteur commun dont le potentiel de base est commandé par le microprocesseur (72) et maintenu pendant l'arrivée du courant (au capteur de position de rotor) à une valeur essentiellement constante afin de maintenir essentiellement constante la tension d'alimentation de l'un au moins des capteurs de position de rotor.
